# EUROPEAN PATENT APPLICATION

(11) **EP 4 465 731 A1**
(43) Date of publication of application: **20.11.2024**
(21) Application number: 23740446.2
(22) Date of filing: 11.01.2023
(51) Int. Cl.: H04W 72/23, H04L 5/00, H04B 7/024

(54) **METHOD FOR TRANSMITTING AND RECEIVING DOWNLINK CONTROL CHANNEL, AND DEVICE THEREFOR**

(30) Priority: 11.01.2022 KR 20220004199
(71) Applicant: LG Electronics Inc., Yeongdeungpo-gu Seoul 07336 (KR)
(72) Inventor: LEE, Sunghoon, Seoul 06772 (KR); YANG, Suckchel, Seoul 06772 (KR); KIM, Seonwook, Seoul 06772 (KR); KIM, Jaehyung, Seoul 06772 (KR); HWANG, Seunggye, Seoul 06772 (KR)
(74) Representative: Frenkel, Matthias Alexander
(86) International application number: PCT/KR2023/000502
(87) International publication number: WO 2023/136602

(57) **Abstract**

Disclosed is a method for a terminal to receive a physical downlink control channel (PDCCH) in a wireless communication system. In particular, the method comprises: receiving a plurality of pieces of downlink control information (DCI) for scheduling a plurality of physical downlink shared channels (PDSCHs), wherein each of the plurality of pieces of DCI includes a single field for PDCCH monitoring adaptation; receiving the plurality of PDSCHs on the basis of the plurality of pieces of DCI; transmitting a plurality of pieces of hybrid automatic repeat request-acknowledgment (HARQ-ACK) information corresponding to the plurality of PDSCHs; determining, on the basis of the number of ACKs included in the plurality of pieces of HARQ-ACK information, whether PDCCH monitoring adaptation, indicated by at least one of the plurality of pieces of DCI, applies; and receiving the PDCCH on the basis of the determination of whether the PDCCH monitoring adaptation applies.

## Description

### TECHNICAL FIELD

The present disclosure relates to a method of transmitting and receiving a downlink control channel and apparatus therefor and, more particularly, to a method of monitoring a physical downlink control channel (PDCCH) based on at least one piece of downlink control information (DCI) that indicates PDCCH monitoring adaptation within an application delay for initiating the PDCCH monitoring adaptation and apparatus therefor.

### BACKGROUND

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### TECHNICAL PROBLEM

The present disclosure aims to provide a method of transmitting and receiving a downlink control channel and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In an aspect of the present disclosure, provided herein is a method of receiving a physical downlink control channel (PDCCH) by a user equipment (UE) in a wireless communication system. The method may include: receiving a plurality of pieces of downlink control information (DCI) for scheduling a plurality of physical downlink shared channels (PDSCHs), wherein each of the plurality of pieces of DCI includes a single field for PDCCH monitoring adaptation; receiving the plurality of PDSCHs based on the plurality of pieces of DCI; transmitting a plurality of pieces of hybrid automatic repeat request acknowledgment (HARQ-ACK) information for the plurality of PDSCHs; determining whether PDCCH monitoring adaptation indicated by at least one piece of DCI among the plurality of pieces of DCI is applied, based on a number of acknowledgments (ACKs) included in the plurality of pieces of HARQ-ACK information; and receiving the PDCCH based on the determination of whether the PDCCH monitoring adaptation is applied.

Based on that all of the plurality of pieces of HARQ-ACK information are ACKs, the PDCCH monitoring adaptation may be applied for the reception of the PDCCH. Based on that at least one of the plurality of pieces of HARQ-ACK information is a negative acknowledgement (NACK), the PDCCH monitoring adaptation may not be applied for the reception of the PDCCH.

Based on that at least one of the plurality of pieces of HARQ-ACK information is an ACK, the PDCCH monitoring adaptation may be applied for the reception of the PDCCH. Based on all of the plurality of pieces of HARQ-ACK information are NACKs, the PDCCH monitoring adaptation may not be applied for the reception of the PDCCH.

The plurality of pieces of DCI may be received within an application delay of a first piece of DCI among the plurality of pieces of DCI.

All of the plurality of pieces of DCI may be intended to indicate identical PDCCH monitoring adaptation.

The plurality of pieces of DCI may be intended to indicate different PDCCH monitoring adaptation, and the PDCCH monitoring adaptation may be indicated by last received DCI among the plurality of pieces of DCI.

In another aspect of the present disclosure, provided herein is a UE configured to receive a PDCCH in a wireless communication system. The UE may include: at least one transceiver; at least one processor; and at least one memory operatively coupled to the at least one processor and storing instructions that, when executed, cause the at least one processor to perform operations. The operations may include: receiving a plurality of pieces of DCI for scheduling a plurality of PDSCHs through the at least one transceiver, wherein each of the plurality of pieces of DCI includes a single field for PDCCH monitoring adaptation; receiving the plurality of PDSCHs through the at least one transceiver based on the plurality of pieces of DCI; transmitting a plurality of pieces of HARQ-ACK information for the plurality of PDSCHs through the at least one transceiver; determining whether PDCCH monitoring adaptation indicated by at least one piece of DCI among the plurality of pieces of DCI is applied, based on a number of ACKs included in the plurality of pieces of HARQ-ACK information; and receiving the PDCCH through the at least one transceiver based on the determination of whether the PDCCH monitoring adaptation is applied

Based on that all of the plurality of pieces of HARQ-ACK information are ACKs, the PDCCH monitoring adaptation may be applied for the reception of the PDCCH. Based on that at least one of the plurality of pieces of HARQ-ACK information is a NACK, the PDCCH monitoring adaptation may not be applied for the reception of the PDCCH.

Based on that at least one of the plurality of pieces of HARQ-ACK information is an ACK, the PDCCH monitoring adaptation may be applied for the reception of the PDCCH. Based on all of the plurality of pieces of HARQ-ACK information are NACKs, the PDCCH monitoring adaptation may not be applied for the reception of the PDCCH.

The plurality of pieces of DCI may be received within an application delay of a first piece of DCI among the plurality of pieces of DCI.

All of the plurality of pieces of DCI may be intended to indicate identical PDCCH monitoring adaptation.

The plurality of pieces of DCI may be intended to indicate different PDCCH monitoring adaptation, and the PDCCH monitoring adaptation may be indicated by last received DCI among the plurality of pieces of DCI.

In another aspect of the present disclosure, provided herein is a base station (BS) configured to transmit a PDCCH in a wireless communication system in a wireless communication system. The BS may include: at least one transceiver; at least one processor; and at least one memory operatively coupled to the at least one processor and storing instructions that, when executed, cause the at least one processor to perform operations. The operations may include: transmitting a plurality of pieces of DCI for scheduling a plurality of PDSCHs through the at least one transceiver, wherein each of the plurality of pieces of DCI includes a single field for PDCCH monitoring adaptation; transmitting the plurality of PDSCHs through the at least one transceiver based on the plurality of pieces of DCI; receiving a plurality of pieces of HARQ-ACK information for the plurality of PDSCHs through the at least one transceiver; determining whether PDCCH monitoring adaptation indicated by at least one piece of DCI among the plurality of pieces of DCI is applied, based on a number of ACKs included in the plurality of pieces of HARQ-ACK information; and transmitting the PDCCH through the at least one transceiver based on the determination of whether the PDCCH monitoring adaptation is applied.

In another aspect of the present disclosure, provided herein is a method of transmitting a PDCCH by a BS in a wireless communication system. The method may include: transmitting a plurality of pieces of DCI for scheduling a plurality of PDSCHs, wherein each of the plurality of pieces of DCI includes a single field for PDCCH monitoring adaptation; transmitting the plurality of PDSCHs based on the plurality of pieces of DCI; receiving a plurality of pieces of HARQ-ACK information for the plurality of PDSCHs; determining whether PDCCH monitoring adaptation indicated by at least one piece of DCI among the plurality of pieces of DCI is applied, based on a number of ACKs included in the plurality of pieces of HARQ-ACK information; and transmitting the PDCCH based on the determination of whether the PDCCH monitoring adaptation is applied.

In another aspect of the present disclosure, provided herein is an apparatus configured to receive a PDCCH in a wireless communication system, the apparatus comprising: at least one processor; and at least one memory operatively coupled to the at least one processor and storing instructions that, when executed, cause the at least one processor to perform operations comprising: receiving a plurality of pieces of DCI for scheduling a plurality of PDSCHs, wherein each of the plurality of pieces of DCI includes a single field for PDCCH monitoring adaptation; receiving the plurality of PDSCHs based on the plurality of pieces of DCI; transmitting a plurality of pieces of HARQ-ACK information for the plurality of PDSCHs; determining whether PDCCH monitoring adaptation indicated by at least one piece of DCI among the plurality of pieces of DCI is applied, based on a number of ACKs included in the plurality of pieces of HARQ-ACK information; and receiving the PDCCH based on the determination of whether the PDCCH monitoring adaptation is applied.

In a further aspect of the present disclosure, provided herein is a computer-readable storage medium comprising at least one computer program that causes at least one processor to perform operations. The operations may include: receiving a plurality of pieces of DCI for scheduling a plurality of PDSCHs, wherein each of the plurality of pieces of DCI includes a single field for PDCCH monitoring adaptation; receiving the plurality of PDSCHs based on the plurality of pieces of DCI; transmitting a plurality of pieces of HARQ-ACK information for the plurality of PDSCHs; determining whether PDCCH monitoring adaptation indicated by at least one piece of DCI among the plurality of pieces of DCI is applied, based on a number of ACKs included in the plurality of pieces of HARQ-ACK information; and receiving the PDCCH based on the determination of whether the PDCCH monitoring adaptation is applied.

### ADVANTAGEOUS EFFECTS

According to the present disclosure, the operations of a user equipment (UE) may be defined when physical downlink control channel (PDCCH) monitoring adaptation is indicated to the UE through a plurality of pieces of downlink control information (DCI).

In addition, even if the same or different PDCCH monitoring indications are received through a plurality of pieces of DCI, the UE may perform PDCCH monitoring without any issues.

The methods of configuring/indicating/setting PDCCH monitoring adaptation through a plurality of pieces of DCIs proposed in the present disclosure may be performed by the UE independently or in combination.

In addition, the UE may also perform operations defined in the conventional NR standards while reducing unnecessary power consumption based on indicated PDCCH monitoring adaptation within a discontinuous reception (DRX) active time.

The effects that could be obtained from the present disclosure are not limited to those mentioned above. Other effects not mentioned will be clearly understood by those skilled in the art to which the present disclosure pertains from the following description.

### BRIEF DESCRIPTION OF THE DRAWINGS

FIGS. 1 and 2 are diagrams for explaining idle mode discontinuous reception (DRX) operation.
FIGS. 3 to 5 are diagrams for explaining DRX operation in a radio resource control (RRC) connected mode.
FIG. 6 is a diagram for explaining a method of monitoring DCI format 2_6.
FIG. 7 illustrates a process for transmitting a physical uplink control channel (PUCCH) and a physical uplink shared channel (PUSCH).
FIGS. 8 to 10 are diagrams for explaining overall operation processes of a user equipment (UE) and a base station (BS) according to the present disclosure.
FIG. 11 illustrates an example of receiving a plurality of pieces of downlink control information (DCI) within an application delay according to embodiments of the present disclosure.
FIG. 12 illustrates a communication system applied to the present disclosure.
FIG. 13 illustrates wireless devices applicable to the present disclosure.
FIG. 14 illustrates a vehicle or autonomous vehicle applicable to the present disclosure.
FIG. 15 illustrates an extended reality (XR) device applicable to the present disclosure.

### DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

While the following description is given in the context of a 3GPP communication system (e.g., NR) for clarity, the technical spirit of the present disclosure is not limited to the 3GPP communication system. For the background art, terms, and abbreviations used in the present disclosure, refer to the technical specifications published before the present disclosure (e.g., 38.211, 38.212, 38.213, 38.214, 38.300, 38.331, and so on).

5G communication involving a new radio access technology (NR) system will be described below.

Three key requirement areas of 5G are (1) enhanced mobile broadband (eMBB), (2) massive machine type communication (mMTC), and (3) ultra-reliable and low latency communications (URLLC).

Some use cases may require multiple dimensions for optimization, while others may focus only on one key performance indicator (KPI). 5G supports such diverse use cases in a flexible and reliable way.

eMBB goes far beyond basic mobile Internet access and covers rich interactive work, media and entertainment applications in the cloud or augmented reality (AR). Data is one of the key drivers for 5G and in the 5G era, we may for the first time see no dedicated voice service. In 5G, voice is expected to be handled as an application program, simply using data connectivity provided by a communication system. The main drivers for an increased traffic volume are the increase in the size of content and the number of applications requiring high data rates. Streaming services (audio and video), interactive video, and mobile Internet connectivity will continue to be used more broadly as more devices connect to the Internet. Many of these applications require always-on connectivity to push real time information and notifications to users. Cloud storage and applications are rapidly increasing for mobile communication platforms. This is applicable for both work and entertainment. Cloud storage is one particular use case driving the growth of uplink data rates. 5G will also be used for remote work in the cloud which, when done with tactile interfaces, requires much lower end-to-end latencies in order to maintain a good user experience. Entertainment, for example, cloud gaming and video streaming, is another key driver for the increasing need for mobile broadband capacity. Entertainment will be very essential on smart phones and tablets everywhere, including high mobility environments such as trains, cars and airplanes. Another use case is AR for entertainment and information search, which requires very low latencies and significant instant data volumes.

One of the most expected 5G use cases is the functionality of actively connecting embedded sensors in every field, that is, mMTC. It is expected that there will be 20.4 billion potential Internet of things (IoT) devices by 2020. In industrial IoT, 5G is one of areas that play key roles in enabling smart city, asset tracking, smart utility, agriculture, and security infrastructure.

URLLC includes services which will transform industries with ultra-reliable/available, low latency links such as remote control of critical infrastructure and self-driving vehicles. The level of reliability and latency are vital to smart-grid control, industrial automation, robotics, drone control and coordination, and so on.

Now, multiple use cases in a 5G communication system including the NR system will be described in detail.

5G may complement fiber-to-the home (FTTH) and cable-based broadband (or data-over-cable service interface specifications (DOCSIS)) as a means of providing streams at data rates of hundreds of megabits per second to giga bits per second. Such a high speed is required for TV broadcasts at or above a resolution of 4K (6K, 8K, and higher) as well as virtual reality (VR) and AR. VR and AR applications mostly include immersive sport games. A special network configuration may be required for a specific application program. For VR games, for example, game companies may have to integrate a core server with an edge network server of a network operator in order to minimize latency.

The automotive sector is expected to be a very important new driver for 5G, with many use cases for mobile communications for vehicles. For example, entertainment for passengers requires simultaneous high capacity and high mobility mobile broadband, because future users will expect to continue their good quality connection independent of their location and speed. Other use cases for the automotive sector are AR dashboards. These display overlay information on top of what a driver is seeing through the front window, identifying objects in the dark and telling the driver about the distances and movements of the objects. In the future, wireless modules will enable communication between vehicles themselves, information exchange between vehicles and supporting infrastructure and between vehicles and other connected devices (e.g., those carried by pedestrians). Safety systems may guide drivers on alternative courses of action to allow them to drive more safely and lower the risks of accidents. The next stage will be remote-controlled or self-driving vehicles. These require very reliable, very fast communication between different self-driving vehicles and between vehicles and infrastructure. In the future, self-driving vehicles will execute all driving activities, while drivers are focusing on traffic abnormality elusive to the vehicles themselves. The technical requirements for self-driving vehicles call for ultra-low latencies and ultra-high reliability, increasing traffic safety to levels humans cannot achieve.

Smart cities and smart homes, often referred to as smart society, will be embedded with dense wireless sensor networks. Distributed networks of intelligent sensors will identify conditions for cost- and energy-efficient maintenance of the city or home. A similar setup may be done for each home, where temperature sensors, window and heating controllers, burglar alarms, and home appliances are all connected wirelessly. Many of these sensors are typically characterized by low data rate, low power, and low cost, but for example, real time high definition (HD) video may be required in some types of devices for surveillance.

The consumption and distribution of energy, including heat or gas, is becoming highly decentralized, creating the need for automated control of a very distributed sensor network. A smart grid interconnects such sensors, using digital information and communications technology to gather and act on information. This information may include information about the behaviors of suppliers and consumers, allowing the smart grid to improve the efficiency, reliability, economics and sustainability of the production and distribution of fuels such as electricity in an automated fashion. A smart grid may be seen as another sensor network with low delays.

The health sector has many applications that may benefit from mobile communications. Communications systems enable telemedicine, which provides clinical health care at a distance. It helps eliminate distance barriers and may improve access to medical services that would often not be consistently available in distant rural communities. It is also used to save lives in critical care and emergency situations. Wireless sensor networks based on mobile communication may provide remote monitoring and sensors for parameters such as heart rate and blood pressure.

Wireless and mobile communications are becoming increasingly important for industrial applications. Wires are expensive to install and maintain, and the possibility of replacing cables with reconfigurable wireless links is a tempting opportunity for many industries. However, achieving this requires that the wireless connection works with a similar delay, reliability and capacity as cables and that its management is simplified. Low delays and very low error probabilities are new requirements that need to be addressed with 5G.

Finally, logistics and freight tracking are important use cases for mobile communications that enable the tracking of inventory and packages wherever they are by using location-based information systems. The logistics and freight tracking use cases typically require lower data rates but need wide coverage and reliable location information.

### DRX (Discontinuous Reception) operation

The UE uses Discontinuous Reception (DRX) in RRC_IDLE and RRC_INACTIVE state in order to reduce power consumption. When the DRX is configured, the UE performs a DRX operation according to DRX configuration information.

When the UE operates based on the DRX, the UE repeats ON/OFF for reception. For example, when the DRX is configured, the UE attempts to receive/detect the PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.
- RRC_Idle state: state in which a radio connection (RRC connection) is not established between a base station and a UE.
- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into idle mode DRX, Connected DRX (C-DRX) and extended DRX. DRX applied in the RRC IDLE state is called idle mode DRX, and DRX applied in the RRC CONNECTED state is called Connected mode DRX (C-DRX).

eDRX (Extended/enhanced DRX) is a mechanism capable of expanding the cycle of idle mode DRX and C-DRX. In the idle mode DRX, whether to permit eDRX may be configured based on system information (e.g., SIB1).

The SIB1 may include an eDRX-Allowed parameter. The eDRX-Allowed parameter is a parameter indicating whether idle mode extended DRX is permitted.

### (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT (mobile termination).

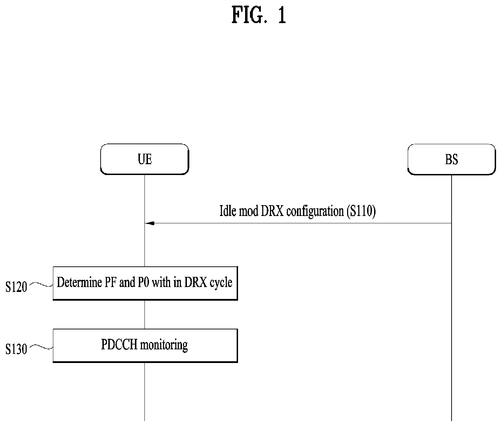

FIG. 1 is a flowchart showing an example of a method of performing an idle mode DRX operation.

A UE receives, from a base station, idle mode DRX configuration information through a higher layer signaling (e.g., system information) (S110).

Furthermore, the UE determines a PF (Paging Frame) and a PO (Paging Occasion), for monitoring a physical downlink control channel (e.g., PDCCH) in a paging DRX cycle based on the idle mode DRX configuration information (S120). In this case, the DRX cycle includes On Duration and sleep duration (or Opportunity for DRX).

Furthermore, the UE monitors a PDCCH in the PO of the determined PF (S130). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On Duration (i.e., if paging is detected), the UE may transit to a connected mode and transmit or receive data with the base station.

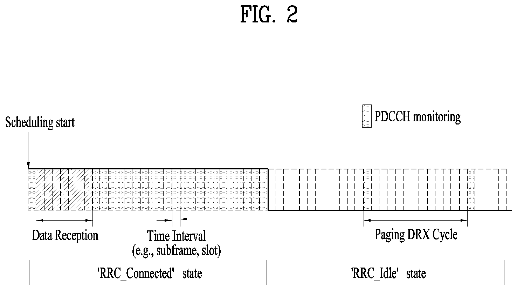

FIG. 2 is a diagram showing an example of an idle mode DRX operation.

Referring to FIG. 2, if there is a traffic (data) toward a UE in the RRC_Idle state (hereinafter referred to as `Idle state'), paging occurs toward the corresponding UE.

Thus, the UE wakes up every (paging) DRX cycle and monitors a PDCCH.

If paging is present, the UE transits to a connected state, and receives data. Otherwise, the UE may enter a sleep mode again.

### (2) Connected Mode DRX (C-DRX)

C-DRX is DRX applied in the RRC connected state. The DRX cycle of C-DRX may be configured as a short DRX cycle and/or a long DRX cycle. The short DRX cycle is optional.

When C-DRX is configured, the UE performs PDCCH monitoring during the On Duration. If a PDCCH is successfully detected during PDCCH monitoring, the UE activates an inactive timer and enter the awake state. On the other hand, if no PDCCH is successfully detected during PDCCH monitoring, the UE enters the sleep state after the end of the On Duration.

When C-DRX is configured, PDCCH reception occasions (e.g., slots with PDCCH search spaces/candidates) may be discontinuously configured based on the C-DRX configuration. On the other hand, if C-DRX is not configured, PDCCH reception occasions (e.g., slots with PDCCH search spaces/candidates) may be continuously configured according to the PDCCH search space configuration. PDCCH monitoring may be restricted within a time duration set as a measurement gap, regardless of the C-DRX configuration.

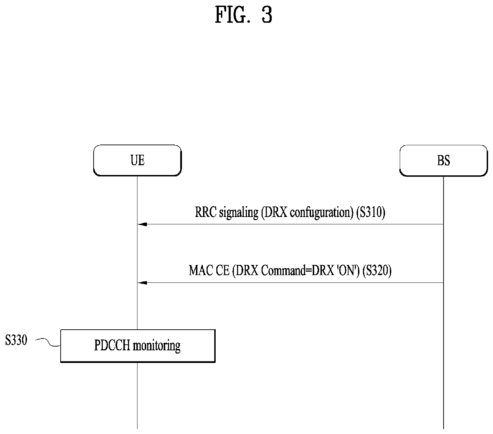

FIG. 3 is a flowchart showing an example of a method of performing a C-DRX operation.

A UE receives, from a base station, RRC signalling (e.g., MAC-MainConfig IE) including DRX configuration information (S310). The DRX configuration information may include the following information.
- on-duration: the duration that the UE waits for, after waking up, to receive PDCCHs. If the UE successfully decodes a PDCCH, the UE stays awake and starts the drx-inactivity timer;
- drx-onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.
- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.
- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S320), the UE monitors a PDCCH for the ON duration of a DRX cycle based on the DRX configuration (S330).

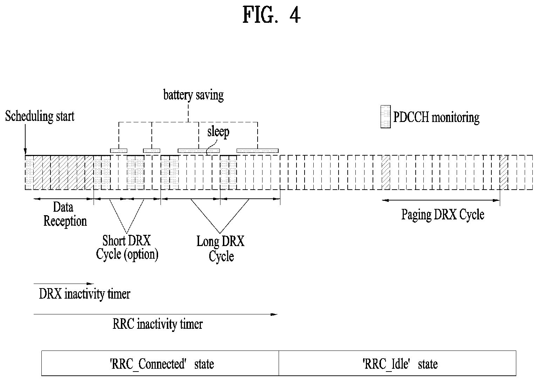

FIG. 4 is a diagram showing an example of a C-DRX operation.

Referring to FIG. 4, when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an idle state and performs an idle mode DRX operation.

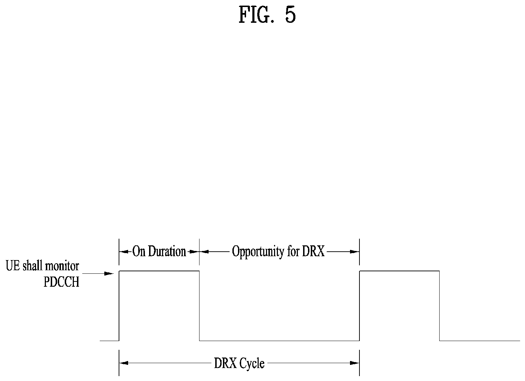

FIG. 5 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

### (3) WUS (DCI Format 2_6)

According to the power saving technology of Rel-16 NR systems, when the DRX operation is performed, it is possible to inform the UE whether the UE needs to wake up for each DRX cycle by DCI format 2_6.

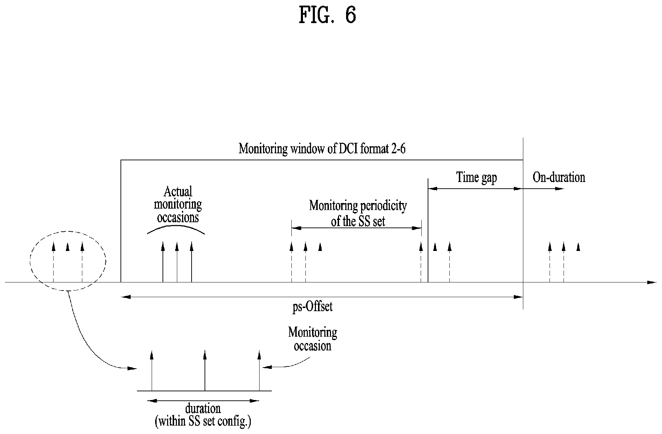

Referring to FIG. 6, a PDCCH monitoring occasion for DCI format 2_6 may be determined by *ps-Offset* indicated by the network and a time gap reported by the UE. In this case, the time gap reported by the UE may be interpreted as a preparation period necessary for an operation after the UE wakes up.

Referring to FIG. 6, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

In the DRX configuration, a monitoring window for monitoring DCI format 2_6 may be determined by the start time of the DRX cycle (e.g., a point where the on-duration timer starts) and *ps-Offset* configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 6) within the monitoring window.

If the UE detects DCI format 2_6 in the monitoring window configured based on *ps-Offset*, the UE may be informed by the BS whether the UE wakes up in the next DRX cycle.

### PDCCH Monitoring Adaptation

In NR standards, SS set group switching and PDCCH monitoring skipping have been defined to reduce the power consumption of the UE. The SS set group switching and PDCCH monitoring skipping are collectively defined as PDCCH monitoring adaptation.

### (1) SS Set Group Switching

In the current NR standards, the SS set group switching has been defined to reduce the power consumption of the UE. According to the SS set group switching, the UE may be configured with a plurality of SS set groups, and an SS set group to be monitored by the UE among the plurality of SS set groups may be indicated. In addition, the UE may monitor an SS set included in the corresponding SS set group according to the corresponding indication and skip monitoring of SS sets not included in the corresponding SS set group.

For example, the UE may be provided with a list of SS set groups configured with a Type 3-PDCCH common search space (CSS) set and/or a user-specific search space (USS) set. In addition, if a list of SS set groups is provided, the UE may monitor SS sets corresponding to group index #0.

The UE may perform the SS set group switching operation depending on whether SearchSpaceSwitchTrigger is configured.

If SearchSpaceSwitchTrigger is configured for the UE, the UE may switch the SS set group according to the indication of DCI format 2_0.

For example, if the value of an SS Set Group Switching Flag field in DCI format 2_0 is 0, the UE may start monitoring SS set group #0 after a predetermined time from the time when the UE receives DCI format 2_0 and stop monitoring SS set group #1.

If the value of the SS Set Group Switching Flag field in DCI format 2_0 is 1, the UE may start monitoring SS set group #1 after a predetermined time from the time when the UE receives DCI format 2_0 and stop monitoring SS set group #0. If the UE starts monitoring SS set group #1, the UE may start counting a timer configured by SearchSpaceSwitchTimer. If the timer expires, the UE may start monitoring SS set group #0 after a predetermined time from the time when the timer expires and stop monitoring SS set group #1.

If SearchSpaceSwitchTrigger is not configured for the UE, the UE may change the SS set group based on DCI reception. For example, when the UE receives the DCI while monitoring SS set group #0 (or SS set group #1), the UE may start monitoring SS set group #1 (or SS set group #0) after a predetermined time from the time when the UE receives the DCI and stop monitoring SS set group #0 (or SS set group #1). In this case, the UE may start counting the timer configured by SearchSpaceSwitchTimer. If the timer expires, the UE may start monitoring SS set group #0 (or SS set group #1) after a predetermined time from the time when the timer expires and stop monitoring SS set group #1 (or SS set group #0).

The UE may start monitoring SS set group #0 (or SS set group #1) after the predetermined time from the time when the UE receives DCI format 2_0 as described above. In this case, monitoring SS set group #0 (or SS set group #1) after the predetermined time may mean that monitoring of SS set group #0 (or SS set group #1) may start from the first slot (or applicable slot boundary) after at least P_{switch} symbols from the last symbol of the PDCCH including the received DCI. Alternatively, depending on subcarrier spacings, monitoring SS set group #0 (or SS set group #1) after the predetermined time may mean that monitoring of SS set group #0 (or SS set group #1) may start from the first slot in a group of specific slots after at least P_{switch} symbols from the last symbol of the PDCCH including the received DCI. This is because the UE may need a prescribed time to decode the DCI, confirm the SS set group switching indication, and perform the SS set group switching operation actually.

In this case, P_{switch} may be configured by RRC signaling. Based on the smallest subcarrier spacing (SCS) (u) among SCSs of all DL BWPs configured for the capability and serving cell (or a set of serving cell) of the UE, the minimum P_{switch} value may be defined as shown in [Table 1] below.

**[Table 1]**

| u | Minimum P_{switch} value for UE processing capability 1 [symbols] | Minimum P_{switch} value for UE processing capability 2 [symbols] |
|---|---|---|
| 0 | 25 | 10 |
| 1 | 25 | 12 |
| 2 | 25 | 22 |

### (2) PDCCH Monitoring Skipping

In the current NR standards, PDCCH monitoring skipping has been defined to reduce the power consumption of the UE. The UE may be configured with a plurality of PDCCH monitoring skipping durations by an RRC parameter. In this case, the plurality of PDCCH monitoring skipping durations may be configured at the slot level. In addition, any one of the plurality of PDCCH monitoring skipping durations may be indicated to the UE in DCI, and the UE may skip PDCCH monitoring during the corresponding duration. On the other hand, the UE may be instructed not to perform PDCCH monitoring skipping (i.e., no PDCCH monitoring skipping) in the DCI indicating the PDCCH monitoring skipping duration. If PDCCH monitoring skipping for a specific period is indicated by a PDCCH monitoring adaptation field of DCI, the UE may perform the PDCCH monitoring skipping from the beginning of the first slot after the last symbol of PDCCH reception including the corresponding DCI.

### (3) Combination of SS Set Group Switching and PDCCH Monitoring Skipping

When the UE is configured with a plurality of SS set groups and a plurality of PDCCH monitoring skipping durations through the RRC layer, and when the UE receives DCI including a PDCCH monitoring adaptation field, the UE may perform SS set group switching or PDCCH monitoring skipping according to the value of the corresponding PDCCH monitoring adaptation field.

For example, depending on whether a plurality of SS set groups are configured and/or whether a plurality of PDCCH monitoring skipping durations are configured, each configurable value of the PDCCH monitoring adaptation field may be mapped to one SS set group or one PDCCH monitoring skipping duration.

When the UE receives the PDCCH monitoring adaptation field, the UE may perform switching to an SS set group corresponding to the corresponding PDCCH monitoring adaptation field value or stop PDCCH monitoring during a PDCCH monitoring skipping duration corresponding to the corresponding PDCCH monitoring adaptation field value.

If the UE receives DCI including a PDCCH monitoring adaptation field indicating PDCCH monitoring skipping in a specific slot, the UE may not expect that a different value from the value of the PDCCH monitoring adaptation field included in the previously received DCI is indicated in the same specific slot.

In addition, if the UE receives DCI including a PDCCH monitoring adaptation field indicating SS set group switching in a specific slot, the UE may not expect that a different value from the value of the PDCCH monitoring adaptation field included in the DCI received in the specific slot is indicated in a slot at least before P_{switch} symbols from the specific slot. That is, the UE may expect that a different value from the value of the PDCCH monitoring adaptation field included in the DCI received in the specific slot is indicated in a slot at least after the P_{switch} symbols from the specific slot.

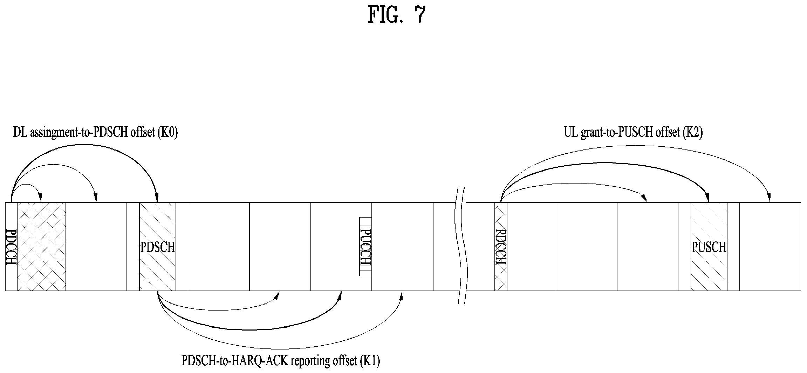

FIG. 7 is a diagram illustrating a HARQ-ACK transmission timing, a PUSCH transmission timing, and an allocation method.

HARQ-ACK is information that indicates whether the UE has successfully received a physical downlink channel. If the UE has successfully received the physical downlink channel, the UE transmits an acknowledgement (ACK) as feedback to the BS. Otherwise, the UE transmits a negative ACK (NACK). In NR, HARQ supports 1-bit HARQ-ACK feedback per TB. FIG. 7 is a diagram illustrating an exemplary HARQ-ACK timing (K1).

In FIG. 7, K0 represents the number of slots from a slot with a PDCCH carrying DL assignment (i.e., DL grant) to a slot with related PDSCH transmission, K1 represents the number of slots from a slot with a PDSCH to a slot with related HARQ-ACK transmission, and K2 represents the number of slots from a slot with a PDCCH carrying a UL grant to a slot with related PUSCH transmission. That is, K0, K1, and K2 may be briefly summarized as shown in Table 2 below.

**[Table 2]**

| | A | B |
|---|---|---|
| K0 | DL scheduling DCI | Corresponding DL data transmission |
| K1 | DL data reception | Corresponding HARQ-ACK |
| K2 | UL scheduling DCI | Corresponding UL data transmission |

The BS may provide a HARQ-ACK feedback timing to the UE dynamically via DCI or semi-statically via RRC signaling. NR supports different minimum HARQ processing times among UEs. The HARQ processing time includes a delay between a DL data reception timing and a related HARQ-ACK transmission timing as well as a delay between a UL grant reception timing and a related UL data transmission timing. The UE transmits information on its capability regarding the minimum HARQ processing time to the BS. From the perspective of the UE, HARQ ACK/NACK feedback for multiple DL transmissions may be transmitted in a single UL data/control region in the time domain. The timing between DL data reception and related ACK transmission is indicated by DCI.

Compared to the LTE system where the HARQ process is performed per TB or codeword, the NR system supports code block group based (CBG-based) transmission with single/multi-bit HARQ-ACK feedback. A TB may be mapped to one or more code blocks (CBs) depending on the size of the TB. For example, during the channel coding process, a CRC code is attached to the TB. If the CRC-attached TB is not larger than a predetermined size, the CRC-attached TB corresponds to a single CB. However, if the CRC-attached TB is larger than the predetermined certain size, the CRC-attached TB is segmented into a plurality of CBs. In the NR system, the UE may be configured to receive CBG-based transmission, and retransmission may be scheduled to carry a subset of all CBs in the TB.

Referring to FIG. 7, the UE may detect a PDCCH in slot #n. Here, the PDCCH includes downlink scheduling information (e.g., DCI format 1_0 or 1_1) and indicates a DL assignment-to-PDSCH offset (K0) and a PDSCH-HARQ-ACK reporting offset (K1). For example, DCI format 1_0 or 1_1 may include the following information.
- Frequency domain resource assignment: This indicates RB resources allocated to a PDSCH (e.g., one or more contiguous (or non-contiguous) RBs).
- Time domain resource assignment: This indicates K0, i.e., the start position of a PDSCH within a slot (e.g., OFDM symbol index) and the length thereof (e.g., the number of OFDM symbols).
- PDSCH-to-HARQ feedback timing indicator: This indicates K1
- HARQ process number (4 bits): This indicates a HARQ process identity (ID) for data (e.g., PDSCH, TB, etc.).
- Physical uplink control channel (PUCCH) resource indicator (PRI): This indicates a PUCCH resource to be used for UCI transmission among a plurality of PUCCH resources in a PUCCH resource set.

Subsequently, the UE may receive a PDSCH in slot #(n+K0) and then transmit UCI over a PUCCH in slot #(n+K1) based on the scheduling information in slot #n. Here, the UCI includes a HARQ-ACK response for the PDSCH. When the PDSCH is configured to carry up to one TB, the HARQ-ACK response may be composed of one bit. When the PDSCH is configured to carry up to two TBs, the HARQ-ACK response may be composed of two bits if no spatial bundling is configured and one bit if spatial bundling is configured. If a HARQ-ACK transmission timing for a plurality of PDSCHs is designated as slot #(n+K1), the UCI transmitted in slot #(n+K1) includes HARQ-ACK responses for the plurality of PDSCHs.

Referring to FIG. 7, the UE may detect a PDCCH in slot #n. The PDCCH includes DL scheduling information (e.g., DCI format 1_0 or 1_1). DCI format 1_0 or 1_1 may include the following information.
- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

The present disclosure proposes operation methods for the UE when PDCCH monitoring adaptation is indicated through one or more piece of DCI in various environments.

The UE may be configured with up to 10 search space (SS) sets per bandwidth part (BWP). In addition, the UE may monitor PDCCH candidates included in the SS sets (hereinafter referred to as SS set monitoring).

Considering that the UE needs to perform blind decoding (BD) on a PDCCH as the UE does not know at which point in time and in which DCI format the PDCCH will be received, PDCCH monitoring accounts for a significant portion of power consumption.

As a technology for power saving in wireless communication systems (e.g., Rel-17 NR system), there is discussion about PDCCH monitoring adaptation, which involves adjusting the frequency of PDCCH monitoring performed by the UE during the DRX active time to reduce power consumption. In general, PDCCH monitoring adaptation may mean an operation for reducing the frequency of PDCCH monitoring.

As an example of the PDCCH monitoring adaptation, PDCCH monitoring skipping and SS set group (SSSG) switching are considered.

To perform the PDCCH monitoring adaptation operation, the BS may indicate information related to PDCCH monitoring adaptation to the UE using scheduling DCI (defined in Rel-16). The scheduling DCI (e.g., DCI format 0_1, 0_2, 1_1, or 1_2) may include a PDCCH monitoring adaptation indication field of up to two bits. Table 3 below is an excerpt from the draft change request (CR) of RAN1#107-e.

**[Table 3]**

| |
|---|
| - PDCCH monitoring adaptation indication - 0, 1 or 2 bits |
| - 1 or 2 bits, if *searchSpaceGroupIdList-r17* is not configured and if *PDCCHSkippingDurationList* is configured |
| - 1 bit if the UE is configured with only one duration by *PDCCHSkippingDurationList;* |
| - 2 bits if the UE is configured with more than one duration by *PDCCHSkippingDurationList.* |
| - 1 or 2 bits, if *PDCCHSkippingDurationList* is not configured and if *searchSpaceGroupIdList-r17* is configured |
| - 2 bits, if PDCCHSkippingDurationList is configured and if searchSpaceGroupIdList-r17 is configured |
| - 0 bit, otherwise |

The timing for the UE to start the PDCCH monitoring adaptation operation after receiving the DCI has not yet been finalized and is still under discussion. The time from when the UE receives the DCI to when the UE starts performing the PDCCH monitoring adaptation operation is referred to as an application delay. There are mainly two candidates being discussed for the application delay. (1) The application delay is determined after a fixed time from when DCI is received.

The UE receives DCI indicating the PDCCH monitoring adaptation and performs the PDCCH monitoring adaptation operation after a fixed time (e.g., one or more slots) from the time the DCI is received. In this case, P_switch, which is introduced for SSSG switching in the Rel-16 NR standard, the minimum applicable scheduling offset in the Rel-16 NR standard, or 0 slots (i.e., the PDCCH monitoring adaptation is immediately applied from the time the DCI is received) may be considered as the fixed time.

(2) The application delay is determined after the UE performs UL transmission in response to DCI after receiving the DCI.

For example, when DL DCI is received, the PDCCH monitoring adaptation may be applied after transmission of a HARQ-ACK in response to the DL DCI. When UL DCI is received, the PDCCH monitoring adaptation may be applied after transmission of a PUSCH scheduled by the UL DCI.

For example, after the UE receives DCI indicating the PDCCH monitoring adaptation, the UE may perform the PDCCH monitoring adaptation operation simultaneously with UL transmission according to the DCI or perform the PDCCH monitoring adaptation operation after a fixed time (e.g., P_switch) from the UL transmission.

In other words, after receiving DCI indicating the PDCCH monitoring adaptation, the UE may require a certain period of time (i.e., application delay) until actually performing the PDCCH monitoring adaptation. However, the UE may continue to perform PDCCH monitoring during the application delay. Therefore, the UE may receive different DCI indicating the PDCCH monitoring adaptation during the application delay.

However, if the PDCCH monitoring adaptation indication in the initially received DCI differs from the PDCCH monitoring adaptation indication received within the application delay, issues may arise. Additionally, when the application delay extends until HARQ-ACK transmission and the indicated PDCCH monitoring adaptation operation is applied after the HARQ-ACK transmission as described in (2), if the UE receives a plurality of pieces of DCI including the initially received DCI and the DCI received within the application delay, whether the UE performs the PDCCH monitoring adaptation operation may vary depending on the ACK/NACK in HARQ-ACK information in response to the plurality of pieces of DCI.

Therefore, the present disclosure proposes methods for the UE to perform the PDCCH monitoring adaptation operation when the PDCCH monitoring adaptation is indicated through a plurality of pieces of DCI in Rel-17 NR.

The methods proposed in the present disclosure will be described based on C-DRX applied to the UE in the RRC_CONNECTED state. However, the proposed methods are not limited thereto. It may be understood by those skilled in the art that the proposed methods are also applicable to other methods in which a specific period where the UE does not need to expect reception of DL signals is capable of being defined with periodicity (e.g., DRX applied to the UE in the RRC_IDLE state).

Therefore, it is evident that the methods proposed in the present disclosure are applicable to all types of transmission and reception methods expected by the BS and UE, as long as the principles of the proposed methods are not violated unless otherwise stated. Throughout this specification, the term "DRX" is used as a general concept encompassing the terms "C-DRX."

While the present disclosure describes the principles of the proposed methods based on the NR system, the proposed methods are not limited to NR transmission and reception formats unless otherwise specified. The present disclosure provides examples based on the characteristics and structure of the UE supporting C-DRX to explain the principles of the proposed methods, the proposed methods are not limited to the UE supporting C-DRX unless otherwise specified. Therefore, the methods proposed in the present disclosure may be applied to the structure and services of all wireless communication transmission and reception unless the principles of the proposed methods are violated.

In the following description, the classification of methods or options is intended to clarify the description, and the classification is not limitedly interpreted to mean that each should be practiced independently. For example, although each of the methods/options described below may be independently implemented, at least some of the methods/options may be combined to the extent that they do not conflict with each other.

The embodiments described below may be applied to, for example, extended reality (XR). XR is a concept that encompasses augmented reality (AR), virtual reality (VR), and mixed reality (MR). According to the features of XR, the time when traffic is expected to be received is fixed by frame per second (FPS), and due to the effect of jitter, the expected reception time may be delayed or advanced. The jitter of XR traffic appears as a truncated Gaussian probability distribution. Therefore, the power saving effect may be expected by periodically configuring DRX according to FPS. In addition, if PDCCH monitoring adaptation is configured even though no DRX is configured, the power saving effect may be expected only by the PDCCH monitoring adaptation. The power saving effect may be expected by configuring both the DRX and PDCCH monitoring adaptation.

The expected traffic reception time and the expected reception time in consideration of the effect of jitter may be expressed as a probability, and the following embodiments are applicable to achieve the power saving effect in the XR environment as described above.

As an example, as the probability of jitter decreases at a point in time that is relatively far from the expected traffic reception time, the reception probability decreases. Thus, the UE may sparsely monitor PDCCHs for power saving. On the other hand, as the probability of jitter increases at a point in time close to the expected traffic reception time, the reception probability increases. The UE may densely monitor PDCCHs to adjust the power consumption depending on the reception probability. To this end, an SS set group including SS sets for dense PDCCH monitoring may be set to SS set group #0, and an SS set group including SS sets for sparse PDCCH monitoring may be set to SS set group #1. In other words, the SS set group switching operation may be configured for XR in consideration of jitter.

As another example, the UE may perform PDCCH monitoring during a short period with a high probability of receiving traffic due to a high probability of jitter and then repeat a micro-sleep operation. Accordingly, when the UE does not normally receive traffic, the UE may expect the power saving effect by performing the micro-sleep operation quickly. Then, the UE may perform PDCCH monitoring to receive retransmitted traffic, thereby increasing the efficiency of the PDCCH monitoring. In other words, the PDCCH monitoring skipping operation may be configured for XR in consideration of jitter.

While the present disclosure proposes operations based on DCI reception within a DRX active time as an example, the operations may be equally applied when the UE is configured with no DRX.

The present disclosure describes methods of configuring UE operations when the BS transmits a plurality of pieces of DCI including PDCCH monitoring adaptation indications to the UE in the RRC_CONNECTED state and the UE receives the plurality of pieces of DCI. Accordingly, the UE may determine the application delay of the PDCCH monitoring adaptation in various environments including the Rel-17 NR environment. When the UE receives the PDCCH monitoring adaptation indication through the plurality of pieces of DCI within the application delay, the UE may perform the PDCCH monitoring adaptation operation. The PDCCH monitoring adaptation operation may be used to enhance the power saving efficiency and reduce the latency in transmission and reception of control/traffic information.

To this end, the proposed method allows the UE to receive information related to the PDCCH monitoring adaptation from the BS. In addition, the information related to the PDCCH monitoring adaptation received by the UE may include instructions for the PDCCH monitoring adaptation operation as well as UE operations upon receiving the plurality of pieces of DCI and/or UE operations indicated/configured therefor.

The BS may configure the PDCCH monitoring adaptation for the UE, determine/configure information related to the application delay and UE operations upon receiving the plurality of pieces of DCI, and then provide the information to the UE. Based on the information, the BS may determine to transmit a PDCCH including instructions for the PDCCH monitoring adaptation operation of the UE. The proposed methods may also include processes in which the UE transmits signals and/or channels to the BS to inform the BS of the capability, preferred application delay, and/or UE operations when receiving the plurality of pieces of DCI and the BS receives the signals and/or channels.

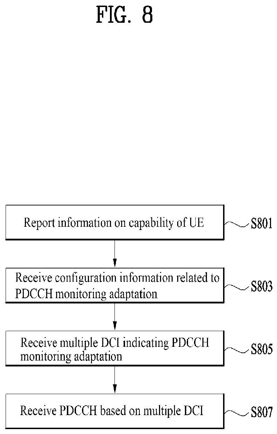

FIGS. 8 to 10 illustrate operation processes of the BS and UE to which the proposed methods of the present disclosure are applicable.

FIG. 8 illustrates an overall operation process of the UE to which the proposed methods of the present disclosure are applicable.

Referring to FIG. 8, to support the proposed methods, the UE may report information on the capability of the UE to the BS (S801). The capability information may include capability information on whether the UE is capable of supporting SSSG switching and/or PDCCH monitoring skipping. In addition, the capability information may include information on an application delay preferred by the UE and information on UE operations when receiving a plurality of pieces of DCI. S801 may be omitted in specific cases (for example, when the BS already has the information or when each operation method is modified due to the needs of the BS).

To support the proposed methods of the present disclosure, the UE may monitor and receive a PDCCH monitoring adaptation configuration, an application delay for PDCCH monitoring adaptation, and configuration information on UE operations when indicated through the plurality of pieces of DCI (S803). In addition, the configuration information may be (semi-)statically configured through the RRC layer. In this case, the configuration information may include configuration information on a plurality of pieces of PDCCH monitoring adaptation. Additionally, a method of specifically indicating one of the configurations of the plurality of pieces of PDCCH monitoring adaptations related to DCI formats through DCI or a MAC CE/header may also be used.

Based on the PDCCH monitoring adaptation configuration and the configuration information on the UE operations when indicated through the plurality of pieces of DCI, the UE may expect a reception time of the plurality of pieces of DCI that include PDCCH monitoring adaptation indications and a related PDCCH monitoring adaptation operation mode. The UE may then receive and decode the DCI at the corresponding time (S805). The UE may perform the PDCCH monitoring adaptation operation indicated by the received DCI based on the PDCCH monitoring adaptation configuration information and then receive a PDCCH (S807).

The specific UE operations in S801 and S807 may be based on at least one of [Method 1] to [Method 3].

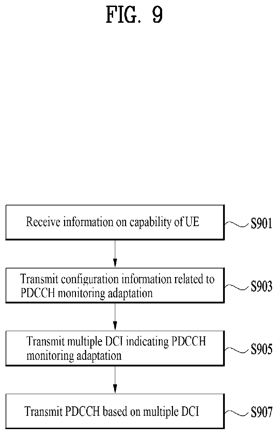

FIG. 9 illustrates an overall operation process of the BS to which the proposed methods of the present disclosure are applicable.

Referring to FIG. 9, to support the proposed methods, the BS may receive information on the capability of the UE (S901). The capability information may include capability information on whether the UE is capable of supporting SSSG switching and/or PDCCH monitoring skipping. In addition, the capability information may include information on an application delay preferred by the UE and information on UE operations when receiving a plurality of pieces of DCI. S901 may be omitted in specific cases (for example, when the BS already has the information or when each operation method is modified due to the needs of the BS).

To support the proposed methods of the present disclosure, the BS may transmit a PDCCH monitoring adaptation configuration, an application delay for PDCCH monitoring adaptation, and configuration information on UE operations when indicated through the plurality of pieces of DCI (S903). In addition, the configuration information may be (semi-)statically configured through the RRC layer. In this case, the configuration information may include configuration information on a plurality of pieces of PDCCH monitoring adaptation. Additionally, a method of specifically indicating one of the configurations of the plurality of pieces of PDCCH monitoring adaptations related to DCI formats through DCI or a MAC CE/header may also be used.

Based on the PDCCH monitoring adaptation configuration and the configuration information on the UE operations when indicated through the plurality of pieces of DCI, the BS may transmit the plurality of pieces of DCI including PDCCH monitoring adaptation indications (S905). The BS may transmit a PDCCH based on the PDCCH monitoring adaptation operation indicated by the DCI transmitted based on the above-described PDCCH monitoring adaptation configuration information (S907).

The specific BS operations in S901 and S907 may be based on at least one of [Method 1] to [Method 3].

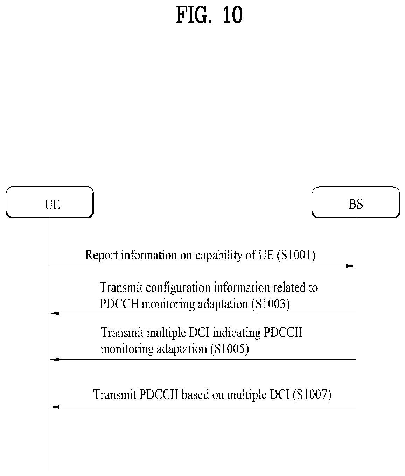

FIG. 10 is a diagram for explaining an overall operation process of a network to which the proposed methods of the present disclosure are applicable.

Referring to FIG. 10, to support the proposed methods, the UE may report to the BS information on the capability of the UE to the BS (S1001). The capability information may include capability information on whether the UE is capable of supporting SSSG switching and/or PDCCH monitoring skipping. In addition, the capability information may include information on an application delay preferred by the UE and information on UE operations when receiving a plurality of pieces of DCI. S1001 may be omitted in specific cases (for example, when the BS already has the information or when each operation method is modified due to the needs of the BS).

To support the proposed methods of the present disclosure, the BS may transmit to the UE a PDCCH monitoring adaptation configuration, an application delay for PDCCH monitoring adaptation, and configuration information on UE operations when indicated through the plurality of pieces of DCI (S1003). In addition, the configuration information may be (semi-)statically configured through the RRC layer. In this case, the configuration information may include configuration information on a plurality of pieces of PDCCH monitoring adaptation. Additionally, a method of specifically indicating one of the configurations of the plurality of pieces of PDCCH monitoring adaptations related to DCI formats through DCI or a MAC CE/header may also be used.

Based on the PDCCH monitoring adaptation configuration and the configuration information on the UE operations when indicated through the plurality of pieces of DCI, the BS may transmit to the UE the plurality of pieces of DCI including PDCCH monitoring adaptation indications (S1005). The BS may transmit to the UE a PDCCH based on the PDCCH monitoring adaptation operation indicated by the DCI transmitted based on the above-described PDCCH monitoring adaptation configuration information (S1007).

The specific BS operations in S1001 and S1007 may be based on at least one of [Method 1] to [Method 3].

In the present disclosure, it is assumed that the UE receives an instruction for PDCCH monitoring adaptation (SSSG switching or PDCCH monitoring skipping) from the BS during DRX operation.

Here, SSSG switching refers to reducing only a portion of monitored SS sets rather than all of the monitored SS sets, and PDCCH monitoring skipping refers to stopping PDCCH monitoring for a certain period of time. The present disclosure will be described by taking a C-DRX UE as an example, but the present disclosure is not limited thereto. The PDCCH monitoring adaptation operation may be instructed for UEs in environments other than DRX, and the methods proposed in the present disclosure may also be applied in non-DRX environments.

For example, two SSSGs including SS sets may be defined for SSSG switching. In general, each SSSG includes fewer SS sets than SS sets configurable for the UE in a BWP. The UE is instructed to monitor only one of the two SSSGs. In this case, since the UE monitors fewer SS sets, compared to conventional NR UEs that monitor all SS sets configurable in the BWP, thereby resulting in power saving benefits. However, the UE does not need to be configured with only two SSSGs. That is, three or more SSSGs may be configured depending on the configuration.

As another example, PDCCH monitoring skipping refers to stopping PDCCH monitoring all or part of a specific period indicated to the UE. The PDCCH monitoring skipping duration of the UE may be defined as few symbols or few slots, or the PDCCH monitoring skipping duration may be defined until the next DRX cycle. PDCCH monitoring skipping allows the UE to temporarily stop PDCCH monitoring for a short period, achieving power saving benefits through the micro-sleep effect.

SSSG switching has been introduced in the Rel-16 NR standard for the purpose of shared spectrum channel access (i.e., NR-U). In the Rel-17 NR standard, SSSG switching has been introduced for power saving as one of the PDCCH monitoring adaptation (monitoring adaptation) operations for the UEs in the RRC_CONNECTED state that is instructed to perform DRX operation. Additionally, the introduction of PDCCH monitoring skipping, which stops PDCCH monitoring, has been determined as another technique for PDCCH monitoring adaptation.

As described above, in Rel-17 NR, PDCCH monitoring adaptation for power saving may use up to a 2-bit field when indicated by scheduling DCI. Table 4 below shows configuration cases for the bit field that was agreed upon at RAN1#106bis-e.

**[Table 4]**

| |
|---|
| **Agreement** (from RAN1#106bis-e) |
| The bit mapping of DCI indication PDCCH monitoring adaptation is as follows, |
| For Case 1 (i.e., PDCCH skipping), the following is supported |
| 1-bit in scheduling DCI is supported to indicate PDCCH monitoring adaptation UE behaviors if *M=*1 |
| '0' is Beh 1 and '1' is Beh 1A |
| 2-bit in scheduling DCI is supported to indicate PDCCH monitoring adaptation UE behaviors if *M*=2 or 3 |
| '00' is Beh 1 |
| '01' is Beh 1A with skipping duration 1 |
| '10' is Beh 1A with skipping duration 2 |
| '11' is Beh 1A with skipping duration 3 if M=3, reserved if M=2 |
| For Case 2 (i.e., 2 SSSG switching), the following is supported |
| 1-bit in scheduling DCI is supported to indicate PDCCH monitoring adaptation UE behaviors |
| '0' is Beh 2 and '1' is Beh 2A |
| For Case 3 (i.e., 3 SSSG switching) , the following is supported |
| 2-bit in scheduling DCI is supported to indicate PDCCH monitoring adaptation UE behaviors |
| '00' is Beh 2 |
| '01' is Beh 2A |
| '10' is Beh 2B |
| ['11' is reserved] |
| For Case 4 (i.e., 2 SSSG switching with PDCCH skipping) , the following is supported |
| 2-bit in scheduling DCI is supported to indicate PDCCH monitoring adaptation UE behaviors, |
| FFS details bit mapping |
| FFS: For Case 5 (i.e., 3 SSSG switching and skipping) |
| 2-bit in scheduling DCI is supported to indicate PDCCH monitoring adaptation UE behaviors |
| '00' is Beh 2 |
| '01' is Beh 2A |
| '10' is Beh 2B |
| '11' is Beh 1A |
| FFS Timer behavior when Beh 1A is indicated |
| Note: The UE can be configured to be indicated by DCI a value of X (i.e., skipping duration) among *M* RRC configured values by scheduling DCIs indicating PDCCH schedules data |
| FFS whether to restrict Skipping duration to be shorter than SSSG initial timer value |
| FFS whether the configuration is same or different for DCI format x_1 and DCI format x_2 |
| Agreement (from RAN1#107-e) |
| For Case 4 (i.e., 2 SSSG switching with PDCCH skipping) , one of the following is supported |
| Alt a: 2-bit in scheduling DCI is supported to indicate PDCCH monitoring adaptation UE behaviors |
| If *M* = 1, then |
| '00' is Beh 2 |
| '01' is Beh 2A |
| '10' is Beh 1A (stay in current SSSG) |
| ⁅'11' is reserved⁆ |
| If *M* = 2, then |
| '00' is Beh 2 |
| '01' is Beh 2A |
| '10' is Beh 1A for duration T1 |
| '11' is Beh 1A for duration T2 |
| Note: for '00' and '01', UE performs Beh 1(i.e., does not perform PDCCH skipping ) |
| Note: By a single DCI indication, a UE is not expected to simultaneously perform two behaviors of SSSG switching and PDCCH skipping. |
| FFS SSSG switching timer behavior, and timer value related to the value of T1/T2 |

The behaviors (hereinafter referred to as Beh) related to the monitoring adaptation operations of the UE regarding the aforementioned agreement have been defined as follows through previous meetings. - Beh 1: PDCCH monitoring skipping is not activated.
- Beh 1A: PDCCH monitoring skipping means stopping PDCCH monitoring for a period of X.
- Beh 2: PDCCH monitoring skipping means stopping monitoring SS sets associated with SSSG#1 and SSSG#2 and starting monitoring SS sets associated with SSSG#0 (legacy behavior).
- Beh 2A: PDCCH monitoring skipping means stopping monitoring SS sets associated with SSSG#0 and SSSG#2 and starting monitoring SS sets associated with SSSG#1 (legacy behavior).
- Beh 2B (if confirmed): PDCCH monitoring skipping means stopping monitoring SS sets associated with SSSG#0 and SSSG#1 and starting monitoring SS sets associated with SSSG#2.

As can be seen from the agreement and the PDCCH monitoring adaptation operations of the UE, Beh 1 may not be configured depending on each case. Here, Beh 1 may be interpreted as instructing the UE not to perform any PDCCH monitoring adaptation operations.

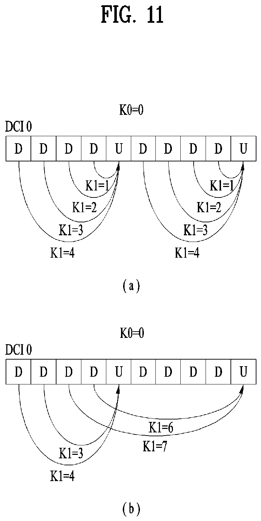

When the UE is instructed to perform a PDCCH monitoring adaptation operation through scheduling DCI, if Beh 1 is not configured, a PDCCH monitoring adaptation operation that conflicts with the previously instructed operation may be indicated. For example, if a two-bit PDCCH monitoring adaptation indication field corresponds to case 3 in Table 4, there may be a case where the PDCCH monitoring adaptation field in DCI 0 first received by the UE is '01' and the PDCCH monitoring adaptation indication field in DCI 1 received during the application delay of DCI 0 is '10' as shown in FIG. 11. Additionally, if the application delay is determined based on HARQ-ACK transmission of the UE, a NACK may occur in one or more pieces of DCI among a plurality of pieces of DCI. Generally, if the application delay related to a PDCCH monitoring adaptation indication included in one piece of DCI is configured in relation to the HARQ-ACK transmission, it is considered that the PDCCH monitoring adaptation indication is not performed in the case of NACK transmission. Therefore, it is necessary to define UE operations when a NACK occurs only some of the plurality of pieces of DCI.

The present disclosure proposes a method for the UE to perform PDCCH monitoring adaptation operations when PDCCH monitoring adaptation is instructed through a plurality of pieces of scheduling DCI. In particular, the present disclosure proposes methods for performing PDCCH monitoring adaptation operations based on the ACK/NACK status of DCI received by the UE when the application delay of PDCCH monitoring adaptation is related to the HARQ-ACK transmission of the UE.

The methods proposed in the present disclosure will be described based on that a PDCCH monitoring adaptation indication in scheduling DCI is related to HARQ-ACK transmission, but the methods are not limited thereto. In other words, the proposed methods may also be applied to cases where a specific instruction through DCI and the timing of executing the instruction are related to HARQ-ACK transmission, in addition to the PDCCH monitoring adaptation indication.

### [Method 1] Method of establishing relationship between PDCCH monitoring adaptation indications when PDCCH monitoring adaptation indications are received through plurality of pieces of DCI

When the UE receives PDCCH monitoring adaptation indications through a plurality of pieces of DCI, the relationship between UE operations and the corresponding PDCCH monitoring adaptation indications may be defined. Here, receiving a plurality of pieces of DCI including PDCCH monitoring adaptation indications means that the plurality of pieces of DCI are received at the same time (e.g., within the same slot) or after reception of a first piece of DCI, another piece of DCI is received within the application delay of a PDCCH monitoring adaptation indication in the first piece of DCI.

Hereinafter, for the convenience of explaining the proposed methods, DCI 0 and DCI x (x=1, 2, 3, ...) are defined. The DCI containing the PDCCH monitoring adaptation indication first received by the UE is referred to as DCI 0. DCI x may refer to one or more of pieces of DCI. The definition of DCI x is as follows.
(1) When the application delay of the PDCCH monitoring adaptation indication is calculated from the timing of DCI reception, DCI x refers to DCI or a plurality of pieces of DCI received within the application delay of DCI 0.
(2) When the application delay of the PDCCH monitoring adaptation indication is calculated from the timing of HARQ-ACK transmission for DCI 0, DCI x refers to DCI or a plurality of pieces of DCI that indicate the same HARQ-ACK timing as that instructed by DCI 0.

In other words, the definition of DCI x may vary depending on the starting point of the application delay of the PDCCH monitoring adaptation indication. In other words, one definition may naturally be selected based on the application delay.

FIGS. 11(a) and 11(b) illustrate examples of ACK/NACK transmission for a plurality of pieces of DCI. In FIGS. 1 1(a) and 11(b), D denotes a downlink slot, and U denotes an uplink slot. Additionally, K0, which represents the interval between DCI and a PDSCH, is 0 slots, while K1, which represents the interval between the PDSCH scheduled by the DCI and a HARQ-ACK, has different values depending on the DCI. However, since K0 is 0 slots in FIGS. 11(a) and 11(b), K1 may be understood as indicating the interval between the DCI and HARQ-ACK.

Additionally, FIGS. 11(a) and 11(b) illustrate a configuration of DDDDU in units of 5 slots. It is illustrated that DCI 0 containing a PDCCH monitoring adaptation indication is received in the first downlink slot.

Meanwhile, operations according to [Method 1-1] and/or [Method 1-2] described in the present disclosure as well as the execution of the operations according to [Method 1-1] and/or [Method 1-2] may be preconfigured or instructed by the BS to the UE through higher layer signaling, DCI, and/or a MAC CE.

### [Method 1-1] PDCCH monitoring adaptation indications of DCI 0 and DCI x need to always be same.

When the earliest DCI among a plurality of pieces of DCI received by the UE that includes a PDCCH monitoring adaptation indication is referred to as DCI 0, one or more pieces of DCI x may be received within the application delay of DCI 0. In this case, the BS may configure the PDCCH monitoring adaptation indication included in DCI 0 to always be the same as the PDCCH monitoring adaptation indication included in DCI x. In other words, the bit value of the PDCCH monitoring adaptation field indicated by DCI 0 may always be the same as the bit value of the PDCCH monitoring adaptation indication field in DCI x received by the UE during the application delay of DCI 0.

In this case, even if the UE fails to receive DCI 0, the UE may receive the PDCCH monitoring adaptation indication originally intended by the BS through DCI x. Additionally, since the UE may expect the PDCCH monitoring adaptation indications of DCIs received within a specific period of time (e.g., the application delay of DCI 0) to always be the same, the UE may perform the PDCCH monitoring adaptation operation without issues even if some pieces of DCI are missed.

Additionally, [Method 1-1] may be beneficial in terms of decoding of DCI. DCI is encoded/decoded using polar codes. When the field value of the PDCCH monitoring adaptation indication is obtained by receiving DCI 0, it is possible to know in advance up to two-bit information corresponding to the PDCCH monitoring adaptation indication field among the information bits of DCI x, which is not DCI 0.

When the UE knows in advance the bit value of the PDCCH monitoring adaptation indication in DCI x, the UE may consider some of the information bits of the polar code (for example, up to two bits corresponding to the PDCCH monitoring adaptation indication field) as frozen bits, thereby reducing the code rate of the corresponding DCI from the perspective of the UE.

Therefore, the UE may perform DCI decoding more easily. On the other hand, even if the decoding of DCI 0 fails, the UE may lower the code rate of DCI 0 by checking the bits of the PDCCH monitoring adaptation indication field in subsequent DCI x and then attempt to decode DCI 0 again.

According to [Method 1-1], the UE may ensure the robustness of DCI reception. However, on the other hand, since [Method 1-1] may involve repeatedly transmitting the same bit values, it may result in some degree of resource wastage.

### [Method 1-2] PDCCH monitoring adaptation indication in DCI 0 and PDCCH monitoring adaptation indication in DCI x may be different.

Assuming that the earliest DCI among a plurality of pieces of DCI received by the UE, which includes a PDCCH monitoring adaptation indication, is DCI 0, the UE may receive one or more pieces of DCI x within the application delay of DCI 0. The BS may consider cases where the PDCCH monitoring adaptation indication in DCI 0 and the PDCCH monitoring adaptation indication in DCI x are different. In other words, the bit value of the PDCCH monitoring adaptation indication field indicated by the BS through DCI 0 may be different from the bit value of the PDCCH monitoring adaptation indication field of DCI x received by the UE during the application delay of DCI 0.

If the PDCCH monitoring adaptation indication of DCI 0 is different from the PDCCH monitoring adaptation indication of DCI x, the UE may operate according to the PDCCH monitoring adaptation indication of DCI x. If there are a plurality of pieces of DCI x, the UE may operate according to the PDCCH monitoring adaptation indication of DCI x received last in time. This allows the BS to cancel or modify the PDCCH monitoring adaptation operation previously instructed to the UE. In other words, the flexibility of the PDCCH monitoring adaptation indication transmitted by the BS to the UE may be expected.

However, even in this case, the UE may expect that the PDCCH monitoring adaptation indications of DCI received at the same time will always be the same. Here, the term "same time" may mean receiving a plurality of pieces of DCI within the same slot. Alternatively, the "same time" may refer to receiving a plurality of pieces of DCI within K0 slots from the timing of receiving DCI 0 (if K0 is not 0). For example, even if the UE receives DCI at different times, if the decoding time is the same, it may be considered as receiving the DCI at the same time. Since K0 is configured considering the time required for decoding DCI and the decoding time of the DCI, if K0 is configured such that DCI received within K0 slots from the timing of receiving DCI 0 (if K0 is not 0) are decoded at the same time as DCI 0, the DCI may be regarded as being received at the same time as DCI 0.

According to [Method 1-2], the flexibility in PDCCH monitoring adaptation operations, which the BS is capable of instructing to the UE, may be expected as described above. Even if the BS instructs a PDCCH monitoring adaptation operation through DCI 0, the UE may suddenly have data that needs to be transmitted.

For example, when the PDCCH monitoring operation instructed via DCI 0 involves skipping PDCCH monitoring for certain slots, if it is not allowed to cancel indications in DCI 0 as in [Method 1-1], data transmission may be resumed after the end of the PDCCH monitoring skipping operation. However, [Method 1-2] has an advantage of capable of invalidating a previous PDCCH monitoring adaptation operation and instruct a new PDCCH monitoring adaptation operation for the UE through a new PDCCH monitoring adaptation indication.

However, if the UE correctly receives DCI 0 but misses DCI x including the new PDCCH monitoring adaptation indication, the PDCCH monitoring adaptation operation actually performed by the UE may not match the operation expected by the BS. Considering that the intention behind configuring the application delay of SSSG switching after a HARQ-ACK/PUSCH is to prevent the misalignment between an SSSG where the BS expects the UE to perform PDCCH monitoring and an SSSG where the UE actually performs monitoring, [Method 1-2] may conflict with the intended purpose of the above operation.

Therefore, to resolve this issue, the following method may be considered: the UE identifies in advance PUCCH resources for transmitting a HARQ-ACK for DCI including PDCCH monitoring adaptation indications and informs the BS of the DCI indicating the PDCCH monitoring adaptation performed by the UE using the PUCCH resources. For example, if the UE operates according to the PDCCH monitoring adaptation indicated by DCI 0, the UE may transmit HARQ-ACKs for both DCI 0 and DCI x on PUCCH resource #0 associated with DCI 0.

### [Method 2] UE operations upon receiving plurality of pieces of PDCCH monitoring adaptation through plurality of pieces of DCI when application delay of PDCCH monitoring adaptation indication is configured in relation to HARQ-ACK transmission

When a plurality of pieces of PDCCH monitoring adaptations are indicated through a plurality of pieces of DCI, if UE operations based on the PDCCH monitoring adaptation indications are configured at the same time, it may be advantageous for the BS in determining the timing of the UE operations.

Among candidates being discussed for the application delay of a PDCCH monitoring adaptation indication, the same point in time for a plurality of pieces of DCI may start simultaneously with UL transmission of the UE, such as HARQ-ACK transmission or PUSCH transmission, or the same point in time may start after a specific time has elapsed after the UL transmission of the UE. In [Method 2] of the present disclosure, the application delay related to ACK or NACK transmission for DL DCI and methods of applying PDCCH monitoring adaptation will be described. For the convenience of explanation, the present disclosure is described based on the above example; however, in the case of UL DCI, ACK transmission may be replaced by PUSCH transmission, and NACK transmission may be replaced by skipping PUSCH transmission. Additionally, [Method 2-1], [Method 2-2], and [Method 2-3] will be described on the assumption of [Method 1-1]. That is, [Method 2-1], [Method 2-2], and [Method 2-3] will be described by assuming that the PDCCH monitoring adaptation indications of DCI are the same.

However, this is for the convenience of explanation only, and it is also possible to apply [Method 2-1], [Method 2-2], and/or [Method 2-3] by assuming that the PDCCH monitoring adaptation indications of DCI are different as described in [Method 1-2]. In other words, assuming [Method 1-2], a PDCCH monitoring adaptation indication that the UE performs in [Method 2-1], [Method 2-2], and/or [Method 2-3] may be a PDCCH monitoring adaptation indication of DCI received at the latest point in time.

### [Method 2-1] UE performs PDCCH monitoring adaptation indications only if UE transmits ACKs for all plurality of pieces of DCI including PDCCH monitoring adaptation indications.

According to Method 2-1, the UE performs a PDCCH monitoring adaptation indication only if the UE transmits ACKs for DCI 0 and at least one piece of DCI x received within the application delay. In other words, if a NACK occurs for any of a plurality of pieces of DCI, the UE does not perform the PDCCH monitoring adaptation indication. In this case, PDCCH monitoring adaptation indications that the UE does not perform may be based on retransmitted DCI (hereinafter referred to as DCI x+1) related to PDSCH reception where the NACK occurs. For example, when the UE receives four pieces of DCI and a NACK occurs for the third DCI, the UE may be expected to monitor a PDCCH according to the PDCCH monitoring adaptation indication included in DCI rescheduling the PDSCH scheduled by the third DCI. However, if NACKs occur for the plurality of pieces of DCI, the UE may be expected to monitor the PDCCH according to the PDCCH monitoring adaptation indication included in the latest received DCI among rescheduling DCI for the plurality of pieces of DCI. Alternatively, the UE may be expected to monitor the PDCCH according to the PDCCH monitoring adaptation indication included in the rescheduling DCI corresponding to the latest received DCI among the plurality of pieces of DCI where the NACKs occur. Alternatively, the UE may be expected that all rescheduling DCI for the plurality of pieces of DCI corresponding to the NACK include the same PDCCH monitoring adaptation indication.

Additionally, for the same DCI format, the PDCCH monitoring adaptation indication field configurations may be the same, but for different DCI formats, the PDCCH monitoring adaptation indication field configurations may vary.

For example, in DCI format 1_1, the PDCCH monitoring adaptation indication field may be two bits, but in DCI format 1_2, the PDCCH monitoring adaptation indication field may be zero bits. In other words, the PDCCH monitoring adaptation indication field may not be configured in DCI format 1_2. In such cases, DCI 0 and DCI x may have DCI format 1_1, but DCI x+1 for retransmission may be transmitted in DCI format 1_2. In this case, the PDCCH monitoring adaptation indication field is not configured in DCI x+1 for retransmission. Therefore, the PDCCH monitoring adaptation indications in previous DCI 0 and DCI x may be performed based on a new point in time, which is the ACK transmission time for DCI x+1.

As another example, the PDCCH monitoring adaptation indication field may be configured in DCI x+1 for retransmission. In this case, the UE may ignore the PDCCH monitoring adaptation indications in previous DCI 0 and DCI x and operate according to the PDCCH monitoring adaptation indication in DCI x+1. This is because since the BS already receives the ACK/NACK for DCI 0 and DCI x, the BS may need to transmit a new PDCCH monitoring adaptation indication in consideration of a changed data transmission situation or the buffering of the UE.

### [Method 2-2] UE performs PDCCH monitoring operation according to PDCCH monitoring adaptation indication only if UE transmits at least one ACK for plurality of pieces of DCI including PDCCH monitoring adaptation indications.

According to [Method 2-2], the UE performs PDCCH monitoring according to a PDCCH monitoring adaptation indication only if the UE transmits at least one ACK for DCI 0 and at least one DCI x received within the application delay. In other words, the UE does not perform PDCCH monitoring according to the PDCCH monitoring adaptation indication only if NACKs occurs for all of a plurality of pieces of DCI. In this case, PDCCH monitoring adaptation indications that the UE does not perform may be based on retransmission DCI (hereinafter referred to as DCI x+1) related to PDSCH reception where the NACK occurs as described in [Method 2-1].

However, in the case of [Method 2-2], since the UE does not perform PDCCH monitoring adaptation only if all NACKs occur, the UE may be expected to monitor a PDCCH according to the PDCCH monitoring adaptation indication included in latest received DCI x+1 among all pieces of DCI x+1 corresponding to NACKs. Alternatively, the UE may be expected to monitor the PDCCH according to the PDCCH monitoring adaptation indication included in DCI x+1 corresponding to latest received DCI x. Alternatively, the UE may be expected that all pieces of DCI x+1 include the same PDCCH monitoring adaptation indication.

Additionally, for the same DCI format, the PDCCH monitoring adaptation indication field configurations may be the same, but for different DCI formats, the PDCCH monitoring adaptation indication field configurations may vary.

For example, in DCI format 1_1, the PDCCH monitoring adaptation indication field may be two bits, but in DCI format 1_2, the PDCCH monitoring adaptation indication field may be zero bits. In other words, the PDCCH monitoring adaptation indication field may not be configured in DCI format 1_2. In such cases, DCI 0 and DCI x may have DCI format 1_1, but DCI x+1 for retransmission may be transmitted in DCI format 1_2. In this case, the PDCCH monitoring adaptation indication field is not configured in DCI x+1 for retransmission. Therefore, the PDCCH monitoring adaptation indications in previous DCI 0 and DCI x may be performed based on a new point in time, which is the ACK transmission time for DCI x+1.

As another example, the PDCCH monitoring adaptation indication field may be configured in DCI x+1 for retransmission. In this case, the UE may ignore the PDCCH monitoring adaptation indications in previous DCI 0 and DCI x and operate according to the PDCCH monitoring adaptation indication in DCI x+1. This is because since the BS already receives the ACK/NACK for DCI 0 and DCI x, the BS may need to transmit a new PDCCH monitoring adaptation indication in consideration of a changed data transmission situation or the buffering of the UE.

In [Method 2-2], if an indicated PDCCH monitoring adaptation operation is not performed, NACKs occur for all pieces of DCIs. Thus, the UE may determine that there is an issue with the channel and may additionally perform procedures such as beam refinement.

If the indicated PDCCH monitoring adaptation operation is SSSG switching, the detailed operations of the UE may vary depending on whether the PDCCH monitoring operation is performed simultaneously with ACK transmission or after a certain period of time following ACK transmission. If the SSSG switching is performed simultaneously with the ACK transmission, retransmission of a PDSCH corresponding to the NACK may be carried out by performing SS set monitoring in an SSSG after the switching. If the PDCCH monitoring adaptation operation is performed after a certain time (T, for example, P_switch) following the ACK transmission, the UE may monitor a PDCCH and receive DCI during the interval T between the ACK transmission and the PDCCH monitoring adaptation operation.

Therefore, the BS may consider T when transmitting DCI after the UE performs the ACK transmission. For example, if the BS transmits DCI for retransmission or DCI for new transmission within T after receiving the ACK, the UE may not properly receive the DCI if there is a transmission delay or if T is short. Thus, it may be considered for the BS to transmit the DCI in consideration of T after the UE transmits the ACK.

For example, if the UE is monitoring SSSG#0 and then switches to SSSG#1 by receiving a PDCCH monitoring adaptation indication, the BS transmits DCI in an SS set included in SSSG#0, but the UE changes the monitoring target to an SS set included in SSSG#1 and thus fails to properly receive the DCI transmitted by the BS. To prevent such an issue, a method by which the BS selects an SS set included in both an SSSG before switching and an SSSG after the switching and then transmits DCI may be considered. Alternatively, a method by which the BS delays DCI transmission during T and then transmits the DCI after the UE completes SSSG switching may be considered.

### [Embodiment 1] When UE has no SS set to monitor after performing PDCCH monitoring adaptation operation

Embodiment 1 may require the application of [Method 2-1]. The UE may be instructed to perform SSSG switching, and an SSSG after the switching may be an SSSG that does not include any SS set (e.g., empty SSSG). This may correspond to '1' of case 2 or '01' or `10' of case 3 among the configurations of the aforementioned PDCCH monitoring adaptation indication field.

Alternatively, a PDCCH monitoring skipping indication may correspond to Embodiment 1 regardless of a PDCCH monitoring skipping duration. Embodiment 1 may correspond to a case where the UE has no SS set to monitor during a certain period of time (e.g., PDCCH monitoring skipping duration or duration of monitoring the empty SSSG) after performing the PDCCH monitoring adaptation indication. In other words, in Embodiment 1, even when a NACK occurs, if the UE monitors a PDCCH according to the PDCCH monitoring adaptation indication, a retransmission procedure for a PDSCH where the NACK occurs may not be performed.

In this cases, the UE needs to perform the retransmission procedure after the end of PDCCH monitoring adaptation, which may cause latency issues for both the UE and BS. Therefore, in the case of Embodiment 1, if at least one NACK occurs for a plurality of pieces of DCI, the UE may be configured to performing the indicated PDCCH monitoring adaptation operation after completing the retransmission procedure.

In a similar embodiment, a PDCCH monitoring skipping operation that terminates the current DRX cycle of the UE may be considered. In this case, similar to the operations in Embodiment 1 described above, if the UE is instructed to enter the sleep mode after the end of the current DRX cycle, the UE needs to wait incomplete retransmission until the next DRX active time, which may be problematic in terms of latency. Therefore, in this case, the UE may be configured to wait until a retransmission timer for the retransmission procedure expires (i.e., until the retransmission procedure is completed) and then perform the indicated PDCCH monitoring adaptation operation after the retransmission timer has expired.

### [Embodiment 2] When UE has one or more SS sets to monitor after performing PDCCH monitoring adaptation operation

Embodiment 2 may require the application of [Method 2-2]. The UE may be instructed to perform SSSG switching, and an SSSG after the switching may include one or more SS sets. This may correspond to '0' of case 2, `00' of case 3, or '01'/'10' of case 3 when there is no empty SSSG among the configurations of the aforementioned PDCCH monitoring adaptation indication field.

Embodiment 2 may correspond to a case where the UE has one or more SS sets to monitor during a certain period of time after performing the PDCCH monitoring adaptation indication. As described above in [Method 2-2], if the indicated PDCCH monitoring adaptation operation is not performed, it may correspond to a case where NACKs occur for all of a plurality of pieces of DCI. Thus, the UE may determine that there is an issue with the channel or beam.

### [Embodiment 3] When same PDCCH monitoring adaptation operation is always configured regardless of specific indications thereof

Embodiment 3 may require the application of [Method 2-1]. Since the same method needs to be applied for any PDCCH monitoring adaptation operations, [Method 2-1] capable of considering both PDCCH monitoring skipping and empty SSSG switching may be applicable.

**[Method 2-3] Even if same PDCCH monitoring adaptation operation is indicated by DCI 0 and DCI x, time of applying PDCCH monitoring adaptation operation may change.**

Even if DCI 0 and DCI x indicate the same PDCCH monitoring adaptation operation, the time at which the UE applies the PDCCH monitoring adaptation operation may differ. Referring to FIG. 11(b), the time of transmitting HARQ-ACKs for some pieces of DCI including DCI 0 may be different from the time of transmitting HARQ-ACKs for DCI x received within the application delay of DCI 0. In this case, the UE may be configured/instructed to apply an indicated PDCCH monitoring adaptation based on either the time of transmitting HARQ-ACK for DCI 0 or the time of transmitting the HARQ-ACK for DCI x, which is received later in time.

Alternatively, even if it is not explicitly configured/instructed, it may be implicitly selected based on whether the UE applies [Method 2-1] or [Method 2-2]. For example, considering that the ACK/NACK transmission for DCI x is not completed, the application time of the PDCCH monitoring adaptation operation may be determined based on the ACK transmission time for DCI x to apply [Method 2-1]. On the other hand, in the case of [Method 2-2], if DCI 0 is an ACK, the PDCCH monitoring adaptation may be performed based on the ACK transmission time for DCI 0, and the detailed operation may be performed according to [Method 2-2].

**[Method 2-4] If PDCCH monitoring adaptation indications indicated by plurality of pieces of DCI are different, UE determines whether to perform PDCCH monitoring adaptation operation according to [Method 2-1] or [Method 2-2] and then performs PDCCH monitoring operation based on PDCCH monitoring adaptation indication of most recently received DCI.**

In [Method 2-1] and [Method 2-2], it is ensured that the BS instructs the UE with the same PDCCH monitoring adaptation through a plurality of pieces of DCI. However, the same PDCCH monitoring adaptation may not be indicated as described in [Method 1-2],

When the PDCCH monitoring adaptation is indicated through a plurality of pieces of DCI, whether the UE performs the PDCCH monitoring adaptation operation may be determined according to [Method 2-1] or [Method 2-2]. If the UE determines to perform the PDCCH monitoring adaptation operation according to [Method 2-1] or [Method 2-2], the UE may monitor a PDCCH according to the PDCCH monitoring adaptation indication included in the most recently received DCI among the plurality of pieces of DCI, which may include different PDCCH monitoring adaptation operations.

In this case, the most recently received DCI may be the last received DCI corresponding to ACK transmission described in [Method 2-1] and [Method 2-2]. Referring to the example of FIG. 11(a), the UE may receive a plurality of pieces of DCI including PDCCH monitoring adaptation indications, which may be different from each other, in the first to fourth downlink slots and perform ACK transmission for the plurality of pieces of DCI in uplink slots. In this case, the last received DCI may be the DCI received in the fourth downlink slot with K1=1.

### [Method 3] UE operations upon receiving PDCCH monitoring adaptation indications through plurality of pieces of DCI when application delay of PDCCH monitoring adaptation indication is configured in relation to DCI reception time

When the application delay of a PDCCH monitoring adaptation indication is considered from a DCI reception time, if PDCCH monitoring adaptations are indicated through a plurality of pieces of DCI, it may be difficult for the UE to determine the time of performing a PDCCH monitoring operation. Considering the application delay where the UE receives DCI 0 and performs the PDCCH monitoring adaptation operation after a certain period of time (not zero) from the time of receiving DCI 0, the UE may receive additional DCI x during the application delay. Hereinafter, the operation method of the UE in such cases will be described.

In [Method 3], PDCCH monitoring skipping which does not cause any issues even in consideration of the application delay from the DCI reception time will be described. However, [Method 3] may be similarly or identically applied to SSSG switching as well.

In the case of PDCCH monitoring skipping indicated to the UE, even if the UE misses DCI including a PDCCH monitoring skipping indication, it does not cause issues in the operations between the UE and BS. Thus, if the BS configures/indicates in advance the time of transmitting the DCI including the PDCCH monitoring adaptation indication, which the UE needs to follow, the UE may operate smoothly even if the plurality of pieces of DCI indicates different pieces of PDCCH monitoring adaptations. For example, the BS may configure/instruct the UE to operate according to the PDCCH monitoring adaptation indication in DCI 0 or the PDCCH monitoring adaptation indication in latest DCI x in time. This may be based on [Method 1-2],

When the application delay is configured, if the UE misses DCI, SSSG switching may cause a misalignment issue between the UE and BS in terms of SSSG monitoring. Therefore, as described in [Method 1-2], it may be necessary to separate PUCCH resources or add HARQ-ACK bits to inform the BS which PDCCH monitoring adaptation indication the UE is currently following for PDCCH monitoring. For example, if the UE is performing PDCCH monitoring according to the PDCCH monitoring adaptation indication in DCI 0, the UE may transmit a HARQ-ACK on a PUCCH resource corresponding to DCI 0 or include a bit value corresponding to the PDCCH monitoring adaptation in DCI 0 in HARQ-ACK transmission.

Alternatively, the UE may expect that the same PDCCH monitoring adaptation will be always indicated according to [Method 1-1]. However, if the application delay is configured in relation to the DCI reception time, even the same PDCCH monitoring adaptation indication may have different starting points for applying the PDCCH monitoring adaptation operation. For example, both DCI 0 and DCI x may indicate PDCCH monitoring skipping for 5 slots, but due to the difference in the reception times of DCI 0 and DCI x, the starting points at which the UE actually performs the PDCCH monitoring adaptation operation may differ. Therefore, the BS may configure/indicated in advance to the UE whether the reference for determining the starting point of the PDCCH monitoring adaptation operation is DCI 0 or DCI x.

PDCCH monitoring skipping may be applied separately for each PDCCH monitoring skipping indication. For example, a plurality of PDCCH monitoring durations (e.g., two or three PDCCH monitoring durations) may be indicated, and the UE operations may be differentiated based on the length of the indicated PDCCH monitoring skipping duration. In other words, if the end point of the PDCCH monitoring skipping indicated by DCI 0 is t1 and the end point of the PDCCH monitoring skipping indicated by DCI x is t2, the UE operations may be differentiated based on the value of t1 and t2.

For example, if the end point of the PDCCH monitoring skipping indicated by DCI 0 is later than the end point of the PDCCH monitoring skipping indicated by DCI x (t1 > t2), the BS may configure the UE to follow either the PDCCH monitoring adaptation indication of DCI 0 or the PDCCH monitoring adaptation indication of DCI x. If the UE follows the PDCCH monitoring adaptation indication of DCI 0, the BS may expect power saving benefits for the UE. On the other hand, if the UE follows the PDCCH monitoring adaptation indication of DCI x, the BS may expect the benefit of minimizing latency for the UE.

If the end point of the PDCCH monitoring skipping indicated by DCI 0 is earlier than the end point of the PDCCH monitoring skipping indicated by DCI x (t1 < t2), the BS may configure the UE to follow either the PDCCH monitoring adaptation indication of DCI 0 or the PDCCH monitoring adaptation indication of DCI x. If the UE follows the PDCCH monitoring adaptation indication of DCI 0, the BS may expect the benefit of minimizing latency for the UE. On the other hand, if the UE follows the PDCCH monitoring adaptation indication of DCI x, the BS may expect power saving benefits for the UE.

When PDCCH monitoring skipping is indicated by scheduling DCI, if the UE successfully receives the DCI but fails to receive a PDSCH scheduled by the DCI, the UE may be configured to receive retransmission scheduling DCI and a retransmitted PDSCH after the PDCCH monitoring skipping duration indicated by the DCI.

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

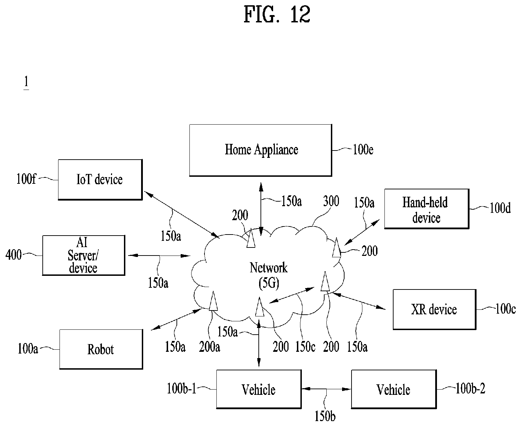

FIG. 12 illustrates a communication system 1 applied to the present disclosure.

Referring to FIG. 12, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted display (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smartglasses), and a computer (e.g., a laptop). The home appliance may include a TV, a refrigerator, a washing machine, and so on. The IoT device may include a sensor, a smartmeter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5GNR) such as UL/DL communication 150a, sidelink communication 150b (or, D2D communication), or inter-BS communication (e.g. relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

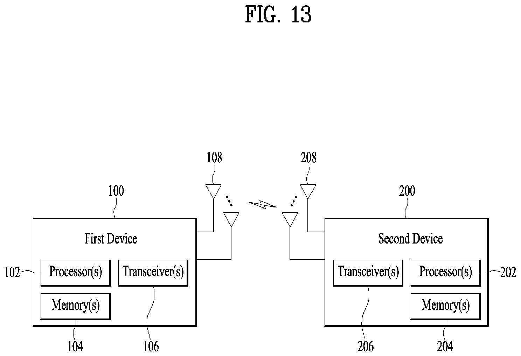

FIG. 13 illustrates wireless devices applicable to the present disclosure.

Referring to FIG. 13, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

Specifically, instructions and/or operations, controlled by the processor(s) 102 of the first wireless device 100 and stored in the memory(s) 104 of the first wireless device 100, according to an Embodiment of the present disclosure will be described.

Although the following operations will be described based on a control operation of the processor(s) 102 in terms of the processor(s) 102, software code for performing such an operation may be stored in the memory(s) 104. For example, in the present disclosure, the at least one memory(s) 104 may be a computer-readable storage medium and store instructions or programs. The instructions or programs may cause, when executed, the at least one processor operably connected to the at least one memory to perform operations according to Embodiments or implementations of the present disclosure, related to the following operations.

For example, to support the proposed methods, the processor(s) 102 may report capability information on the capability of the processor(s) 102 to the BS. The capability information may include information capability information on whether the processor(s) 102 are capable of supporting SSSG switching and/or PDCCH monitoring skipping. In addition, the capability information may include information on an application delay preferred by the processor(s) 102 and information on the operations of the processor(s) 102 when receiving a plurality of pieces of DCI. The process for reporting the capability information may be omitted in specific cases (for example, when the BS already has the information or when each operation method is modified due to the needs of the BS).

To support the proposed methods of the present disclosure, the processor(s) 102 may monitor and receive a PDCCH monitoring adaptation configuration, an application delay for PDCCH monitoring adaptation, and configuration information on UE operations when indicated through the plurality of pieces of DCI through the transceiver(s) 106. In addition, the configuration information may be (semi-)statically configured through the RRC layer. In this case, the configuration information may include configuration information on a plurality of pieces of PDCCH monitoring adaptation. Additionally, a method of specifically indicating one of the configurations of the plurality of pieces of PDCCH monitoring adaptations related to DCI formats through DCI or a MAC CE/header may also be used.

Based on the PDCCH monitoring adaptation configuration and the configuration information on the UE operations when indicated through the plurality of pieces of DCI, the processor(s) 102 may expect a reception time of the plurality of pieces of DCI that include PDCCH monitoring adaptation indications and a related PDCCH monitoring adaptation operation mode. The processor(s) 102 may receive the DCI at the corresponding time through the transceiver(s) 106 and then decode the DCI. The processor(s) 102 may perform the PDCCH monitoring adaptation operation indicated by the received DCI based on the PDCCH monitoring adaptation configuration information and then receive a PDCCH.

The specific operations of the processor(s) 102 described above may be based on at least one of [Method 1] to [Method 3].

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Specifically, instructions and/or operations, controlled by the processor(s) 202 of the second wireless device 100 and stored in the memory(s) 204 of the second wireless device 200, according to an Embodiment of the present disclosure will be described.

Although the following operations will be described based on a control operation of the processor(s) 202 in terms of the processor(s) 202, software code for performing such an operation may be stored in the memory(s) 204. For example, in the present disclosure, the at least one memory(s) 204 may be a computer-readable storage medium and store instructions or programs. The instructions or programs may cause, when executed, the at least one processor operably connected to the at least one memory to perform operations according to Embodiments or implementations of the present disclosure, related to the following operations.

For example, to support the proposed methods, the processor(s) 202 may receive information on the capability of the UE through the transceiver(s) 206. The capability information may include capability information on whether the UE is capable of supporting SSSG switching and/or PDCCH monitoring skipping. In addition, the capability information may include information on an application delay preferred by the UE and information on UE operations when receiving a plurality of pieces of DCI. S901 may be omitted in specific cases (for example, when the processor(s) 202 already has the information or when each operation method is modified due to the needs of the processor(s) 202).

To support the proposed methods of the present disclosure, the processor(s) 202 may transmit a PDCCH monitoring adaptation configuration, an application delay for PDCCH monitoring adaptation, and configuration information on UE operations when indicated through the plurality of pieces of DCI through the transceiver(s) 206. In addition, the configuration information may be (semi-)statically configured through the RRC layer. In this case, the configuration information may include configuration information on a plurality of pieces of PDCCH monitoring adaptation. Additionally, a method of specifically indicating one of the configurations of the plurality of pieces of PDCCH monitoring adaptations related to DCI formats through DCI or a MAC CE/header may also be used.

Based on the PDCCH monitoring adaptation configuration and the configuration information on the UE operations when indicated through the plurality of pieces of DCI, the processor(s) 202 may transmit the plurality of pieces of DCI including PDCCH monitoring adaptation indications through the transceiver(s) 206. The processor(s) 202 may transmit a PDCCH based on the PDCCH monitoring adaptation operation indicated by the DCI transmitted based on the above-described PDCCH monitoring adaptation configuration information through the transceiver(s) 206.

The specific operations of the processor(s) 202 described above may be based on at least one of [Method 1] to [Method 3].

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

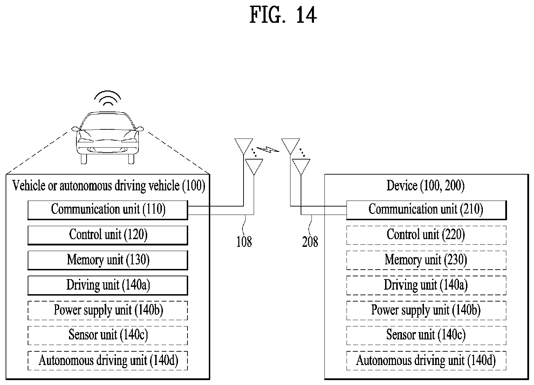

FIG. 14 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 14, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

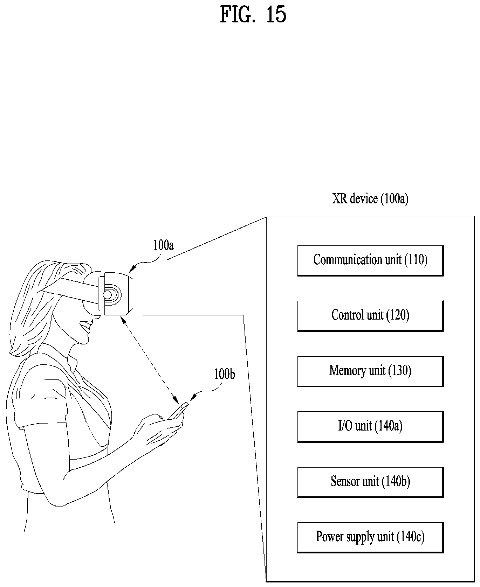

FIG. 15 illustrates an XR device applicable to the present disclosure. The XR device may be implemented as an HMD, a head-up display (HUD) in a vehicle, a television, a smartphone, a computer, a wearable device, a home appliance, digital signage, a vehicle, a robot, and so on.

Referring to FIG. 15, an XR device 100a may include a communication unit 110, a control unit 120, a memory unit 130, an input/output (I/O) unit 140a, a sensor unit 140b, and a power supply unit 140c.

The communication unit 110 may transmit and receive signals (e.g., media data and control signals) to and from external devices such as other wireless devices, handheld devices, or media servers. The media data may include video, images, and sound. The control unit 120 may perform various operations by controlling constituent elements of the XR device 100a. For example, the control unit 120 may be configured to control and/or perform procedures such as video/image acquisition, (video/image) encoding, and metadata generation and processing. The memory unit 130 may store data/parameters/programs/code/instructions needed to drive the XR device 100a and/or generate an XR object. The I/O unit 140a may obtain control information and data from the exterior and output the generated XR object. The I/O unit 140a may include a camera, a microphone, a user input unit, a display unit, a speaker, and/or a haptic module. The sensor unit 140b may obtain an XR device state, surrounding environment information, user information, etc. The sensor unit 140b may include a proximity sensor, an illumination sensor, an acceleration sensor, a magnetic sensor, a gyro sensor, an inertial sensor, an RGB sensor, an IR sensor, a fingerprint recognition sensor, an ultrasonic sensor, a light sensor, a microphone, and/or a radar. The power supply unit 140c may supply power to the XR device 100a and include a wired/wireless charging circuit, a battery, etc.

For example, the memory unit 130 of the XR device 100a may include information (e.g., data) needed to generate the XR object (e.g., an AR/VR/MR object). The I/O unit 140a may receive a command for manipulating the XR device 100a from a user and the control unit 120 may drive the XR device 100a according to a driving command of a user. For example, when a user desires to watch a film or news through the XR device 100a, the control unit 120 may transmit content request information to another device (e.g., a handheld device 100b) or a media server through the communication unit 130. The communication unit 130 may download/stream content such as films or news from another device (e.g., the handheld device 100b) or the media server to the memory unit 130. The control unit 120 may control and/or perform procedures such as video/image acquisition, (video/image) encoding, and metadata generation/processing with respect to the content and generate and/or output the XR object based on information about a surrounding space or a real object obtained through the I/O unit 140a and/or the sensor unit 140b.

The XR device 100a may be wirelessly connected to the handheld device 100b through the communication unit 110 and the operation of the XR device 100a may be controlled by the handheld device 100b. For example, the handheld device 100b may operate as a controller of the XR device 100a. To this end, the XR device 100a may obtain information about a 3D position of the handheld device 100b and generate and output an XR object corresponding to the handheld device 100b.

The Embodiments of the present disclosure described herein below are combinations of elements and features of the present disclosure. The elements or features may be considered selective unless otherwise mentioned. Each element or feature may be practiced without being combined with other elements or features. Further, an Embodiment of the present disclosure may be constructed by combining parts of the elements and/or features. Operation orders described in Embodiments of the present disclosure may be rearranged. Some constructions of any one Embodiment may be included in another Embodiment and may be replaced with corresponding constructions of another Embodiment. It will be obvious to those skilled in the art that claims that are not explicitly cited in each other in the appended claims may be presented in combination as an Embodiment of the present disclosure or included as a new claim by a subsequent amendment after the application is filed.

In the present disclosure, a specific operation described as performed by the BS may be performed by an upper node of the BS in some cases. Namely, it is apparent that, in a network comprised of a plurality of network nodes including a BS, various operations performed for communication with an MS may be performed by the BS, or network nodes other than the BS. The term `BS' may be replaced with the term `fixed station', `Node B', `enhanced Node B (eNode B or eNB)', `access point', etc.

Those skilled in the art will appreciate that the present disclosure may be carried out in other specific ways than those set forth herein without departing from the spirit and essential characteristics of the present disclosure. The above Embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

The method of transmitting and receiving a downlink control channel and apparatus therefor have been described mainly based on the fifth generation (5G) new radio access technology (RAT) system, but the method and apparatus are also applicable to various wireless communication systems including the 5G new RAT system.

## Claims

1. A method of receiving a physical downlink control channel (PDCCH) by a user equipment (UE) in a wireless communication system, the method comprising:
receiving a plurality of pieces of downlink control information (DCI) for scheduling a plurality of physical downlink shared channels (PDSCHs), wherein each of the plurality of pieces of DCI includes a single field for PDCCH monitoring adaptation;
receiving the plurality of PDSCHs based on the plurality of pieces of DCI;
transmitting a plurality of pieces of hybrid automatic repeat request acknowledgment (HARQ-ACK) information for the plurality of PDSCHs;
determining whether PDCCH monitoring adaptation indicated by at least one piece of DCI among the plurality of pieces of DCI is applied, based on a number of acknowledgments (ACKs) included in the plurality of pieces of HARQ-ACK information; and
receiving the PDCCH based on the determination of whether the PDCCH monitoring adaptation is applied.

2. The method of claim 1, wherein based on that all of the plurality of pieces of HARQ-ACK information are ACKs, the PDCCH monitoring adaptation is applied for the reception of the PDCCH, and
wherein based on that at least one of the plurality of pieces of HARQ-ACK information is a negative acknowledgement (NACK), the PDCCH monitoring adaptation is not applied for the reception of the PDCCH.

3. The method of claim 1, wherein based on that at least one of the plurality of pieces of HARQ-ACK information is an ACK, the PDCCH monitoring adaptation is applied for the reception of the PDCCH, and
wherein based on all of the plurality of pieces of HARQ-ACK information are negative acknowledgements (NACKs), the PDCCH monitoring adaptation is not applied for the reception of the PDCCH.

4. The method of claim 1, wherein the plurality of pieces of DCI are received within an application delay of a first piece of DCI among the plurality of pieces of DCI.

5. The method of claim 1, wherein all of the plurality of pieces of DCI are intended to indicate identical PDCCH monitoring adaptation.

6. The method of claim 1, wherein the plurality of pieces of DCI are intended to indicate different PDCCH monitoring adaptation, and
wherein the PDCCH monitoring adaptation is PDCCH monitoring adaptation indicated by last received DCI among the plurality of pieces of DCI.

7. A user equipment (UE) configured to receive a physical downlink control channel (PDCCH) in a wireless communication system, the UE comprising:
at least one transceiver;
at least one processor; and
at least one memory operatively coupled to the at least one processor and storing instructions that, when executed, cause the at least one processor to perform operations comprising:
receiving a plurality of pieces of downlink control information (DCI) for scheduling a plurality of physical downlink shared channels (PDSCHs) through the at least one transceiver, wherein each of the plurality of pieces of DCI includes a single field for PDCCH monitoring adaptation;
receiving the plurality of PDSCHs through the at least one transceiver based on the plurality of pieces of DCI;
transmitting a plurality of pieces of hybrid automatic repeat request acknowledgment (HARQ-ACK) information for the plurality of PDSCHs through the at least one transceiver;
determining whether PDCCH monitoring adaptation indicated by at least one piece of DCI among the plurality of pieces of DCI is applied, based on a number of acknowledgments (ACKs) included in the plurality of pieces of HARQ-ACK information; and
receiving the PDCCH through the at least one transceiver based on the determination of whether the PDCCH monitoring adaptation is applied.

8. The UE of claim 7, wherein based on that all of the plurality of pieces of HARQ-ACK information are ACKs, the PDCCH monitoring adaptation is applied for the reception of the PDCCH, and
wherein based on that at least one of the plurality of pieces of HARQ-ACK information is a negative acknowledgement (NACK), the PDCCH monitoring adaptation is not applied for the reception of the PDCCH.

9. The UE of claim 7, wherein based on that at least one of the plurality of pieces of HARQ-ACK information is an ACK, the PDCCH monitoring adaptation is applied for the reception of the PDCCH, and
wherein based on all of the plurality of pieces of HARQ-ACK information are negative acknowledgements (NACKs), the PDCCH monitoring adaptation is not applied for the reception of the PDCCH.

10. The UE of claim 7, wherein the plurality of pieces of DCI are received within an application delay of a first piece of DCI among the plurality of pieces of DCI.

11. The UE of claim 7, wherein all of the plurality of pieces of DCI are intended to indicate identical PDCCH monitoring adaptation.

12. The UE of claim 7, wherein the plurality of pieces of DCI are intended to indicate different PDCCH monitoring adaptation, and
wherein the PDCCH monitoring adaptation is PDCCH monitoring adaptation indicated by last received DCI among the plurality of pieces of DCI.

13. A base station (BS) configured to transmit a physical downlink control channel (PDCCH) in a wireless communication system in a wireless communication system, the BS comprising:
at least one transceiver;
at least one processor; and
at least one memory operatively coupled to the at least one processor and storing instructions that, when executed, cause the at least one processor to perform operations comprising:
transmitting a plurality of pieces of downlink control information (DCI) for scheduling a plurality of physical downlink shared channels (PDSCHs) through the at least one transceiver, wherein each of the plurality of pieces of DCI includes a single field for PDCCH monitoring adaptation;
transmitting the plurality of PDSCHs through the at least one transceiver based on the plurality of pieces of DCI;
receiving a plurality of pieces of hybrid automatic repeat request acknowledgment (HARQ-ACK) information for the plurality of PDSCHs through the at least one transceiver;
determining whether PDCCH monitoring adaptation indicated by at least one piece of DCI among the plurality of pieces of DCI is applied, based on a number of acknowledgments (ACKs) included in the plurality of pieces of HARQ-ACK information; and
transmitting the PDCCH through the at least one transceiver based on the determination of whether the PDCCH monitoring adaptation is applied.

14. A method of transmitting a physical downlink control channel (PDCCH) by a base station (BS) in a wireless communication system, the method comprising:
transmitting a plurality of pieces of downlink control information (DCI) for scheduling a plurality of physical downlink shared channels (PDSCHs), wherein each of the plurality of pieces of DCI includes a single field for PDCCH monitoring adaptation;
transmitting the plurality of PDSCHs based on the plurality of pieces of DCI;
receiving a plurality of pieces of hybrid automatic repeat request acknowledgment (HARQ-ACK) information for the plurality of PDSCHs;
determining whether PDCCH monitoring adaptation indicated by at least one piece of DCI among the plurality of pieces of DCI is applied, based on a number of acknowledgments (ACKs) included in the plurality of pieces of HARQ-ACK information; and
transmitting the PDCCH based on the determination of whether the PDCCH monitoring adaptation is applied.

15. An apparatus configured to receive a physical downlink control channel (PDCCH) in a wireless communication system, the apparatus comprising:
at least one processor; and
at least one memory operatively coupled to the at least one processor and storing instructions that, when executed, cause the at least one processor to perform operations comprising:
receiving a plurality of pieces of downlink control information (DCI) for scheduling a plurality of physical downlink shared channels (PDSCHs), wherein each of the plurality of pieces of DCI includes a single field for PDCCH monitoring adaptation;
receiving the plurality of PDSCHs based on the plurality of pieces of DCI;
transmitting a plurality of pieces of hybrid automatic repeat request acknowledgment (HARQ-ACK) information for the plurality of PDSCHs;
determining whether PDCCH monitoring adaptation indicated by at least one piece of DCI among the plurality of pieces of DCI is applied, based on a number of acknowledgments (ACKs) included in the plurality of pieces of HARQ-ACK information; and
receiving the PDCCH based on the determination of whether the PDCCH monitoring adaptation is applied.

16. A computer-readable storage medium comprising at least one computer program that causes at least one processor to perform operations comprising:
receiving a plurality of pieces of downlink control information (DCI) for scheduling a plurality of physical downlink shared channels (PDSCHs), wherein each of the plurality of pieces of DCI includes a single field for PDCCH monitoring adaptation;
receiving the plurality of PDSCHs based on the plurality of pieces of DCI;
transmitting a plurality of pieces of hybrid automatic repeat request acknowledgment (HARQ-ACK) information for the plurality of PDSCHs;
determining whether PDCCH monitoring adaptation indicated by at least one piece of DCI among the plurality of pieces of DCI is applied, based on a number of acknowledgments (ACKs) included in the plurality of pieces of HARQ-ACK information; and
receiving the PDCCH based on the determination of whether the PDCCH monitoring adaptation is applied.
